(19) Europäisches Patentamt
European Patent Office
Office européen des brevets

(11) Veröffentlichungsnummer: **0 550 486 B1**

(12) # EUROPÄISCHE PATENTSCHRIFT

(45) Veröffentlichungstag der Patentschrift: **08.02.95**

(51) Int. Cl.$^{6}$: **C09B 41/00**, C09B 67/00

(21) Anmeldenummer: **91916068.9**

(22) Anmeldetag: **25.09.91**

(86) Internationale Anmeldenummer:
**PCT/EP91/01830**

(87) Internationale Veröffentlichungsnummer:
**WO 92/06140 (16.04.92 92/09)**

Die Akte enthält technische Angaben, die nach dem Eingang der Anmeldung eingereicht wurden und die nicht in dieser Patentschrift enthalten sind.

(54) **VERFAHREN ZUR HERSTELLUNG VON KONZENTRIERTEN WÄSSRIGEN LÖSUNGEN VON ANIONISCHEN AZOFARBSTOFFEN.**

(30) Priorität: **27.09.90 DE 4030580**

(43) Veröffentlichungstag der Anmeldung:
**14.07.93 Patentblatt 93/28**

(45) Bekanntmachung des Hinweises auf die Patenterteilung:
**08.02.95 Patentblatt 95/06**

(84) Benannte Vertragsstaaten:
**BE CH DE ES FR GB IT LI NL**

(56) Entgegenhaltungen:
**EP-A- 0 143 406**
**DE-A- 3 046 450**
**DE-A- 3 641 677**
**US-A- 2 812 321**
**US-A- 4 082 742**

(73) Patentinhaber: **HOECHST AKTIENGESELL-SCHAFT**

**D-65926 Frankfurt (DE)**

(72) Erfinder: **MISCHKE, Peter**
**Eichhornweg 2**
**D-6232 Bad Soden (DE)**
Erfinder: **HOHMANN, Kurt**
**Am Forsthaus Gravenbruch 55**
**D-6078 Neu-Isenburg (DE)**
Erfinder: **SCHWAB, Eckhard**
**Geisenheimer Strasse 86**
**D-6000 Frankfurt am Main (DE)**
Erfinder: **SITTIG, Manfred**
**Lessing Strasse 4**
**D-6239 Kriftel (DE)**

**EP 0 550 486 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der wasserlöslichen Azofarbstoffe.

Der Einsatz von flüssigen Farbstoffpräparationen anstelle von Farbstoffpulvern hat in den letzten Jahren immer größere Bedeutung erlangt, da flüssige Farbstoffpräparationen gegenüber den herkömmlichen Pulverformen einige überzeugende Vorteile bieten, wie keine Staubentwicklung beim Ansetzen von Klotz- und Färbeflotten oder Druckpasten, leichte Dosierbarkeit und keine Klumpenbildung infolge ungenügender Benetzung, sondern eine gute und schnelle Verteilung im Anwendungsmedium mit den damit verbundenen einwandfreien Färbeergebnissen. Neben den vielfältigen Anforderungen, die an flüssige Farbstoffpräparationen gestellt werden, wie bspw. einwandfreie Lagerstabilität in einem weiten Temperaturbereich, selbst bei Temperaturen unter dem Gefrierpunkt, leichte Mischbarkeit mit Wasser und anderen flüssigen Farbstoffpräparationen, sollten solche flüssigen Farbstoffpräparationen zur Verringerung von Transport- und Verpakkungskosten möglichst hohe Farbstoffkonzentrationen aufweisen. Die Herstellung dieser hochkonzentrierten Farbstofflösungen sollte ohne großen technischen Aufwand in einwandfrei reproduzierbarer Form möglich sein.

Jedoch wird die Herstellbarkeit hochkonzentrierter wäßriger Lösungen von Azofarbstoffen auf direktem Weg dadurch erschwert oder gar unmöglich gemacht, daß im Verlauf der Diazotierungs- und Kupplungsreaktionen sehr zähflüssige Phasen auftreten, die in den zur Farbstoffherstellung üblicherweise verwendeten Apparaturen zu gravierenden Rührproblemen führen oder ein Durchrühren ganz unmöglich machen. Die Folge davon ist, daß die Farbstoffsynthesen deutlich verlangsamt sind oder nur unvollständig ablaufen, die Bildung von umweltbelastenden Nebenprodukten zunimmt oder die Farbstoffsynthesen infolge des Auftretens von zähpastösen Reaktionsmischungen ganz zum Stillstand kommen.

In der Praxis führt man daher die Diazotierungs- und Kupplungsreaktionen in verdünnten wäßrigen Lösungen durch und konzentriert erst anschließend den Farbstoffgehalt durch teilweisen Wasserentzug, beispielsweise mit Hilfe von Dünnschichtverdampfern oder durch Membrantrennverfahren. Eine Weitere Möglichkeit, konzentriertere Lösungen nach der Synthese zu erhalten, ist die Abscheidung der Farbstoffe nach der Synthese durch geeignete Fällungsreaktionen, wie beispielsweise durch Fällung der anionischen Farbstoffe im stärker sauren Bereich und deren Abtrennung durch Filtration und durch anschließendes erneutes Lösen der so erhaltenen Farbstoffe in Wasser mittels einem alkalischen Mittel zu höher konzentrierten schwach sauren bis neutralen Farbstofflösungen.

Solche Verfahrensschritte nach der Farbstoffsynthese verursachen jedoch Kosten durch zusätzlichen, oftmals ganz erheblichen apparativen Aufwand, deutlich erhöhten Energiebedarf und erhöhten Personal- und Zeitaufwand und sind infolge des möglichen Anfalls großer Mengen an salz- und farbstoffhaltigen Permeaten oder Mutterlaugen in hohem Maße umweltbelastend.

Mit der Deutschen Offenlegungsschrift 28 47 532 wurde nun ein Verfahren zur Herstellung von Azofarbstoffen durch Kupplung von Diazoverbindungen auf Kupplungskomponenten beschrieben, bei welchem die Kupplung in Gegenwart eines Reaktionsproduktes aus Formaldehyd und einer aromatischen Sulfonsäure bzw. dessen Salz durchgeführt wird, wobei dieses Reaktionsprodukt als Kupplungsbeschleuniger agieren soll. Durch diese Verfahrensweise wurde jedoch das Problem der Synthese von hochkonzentrierten wäßrigen Lösungen von Azofarbstoffen nicht gelöst. Vielmehr wurden dort Konzentrationen in den Ausgangsverbindungen gewählt, die so niedrig sind, daß sich viskose Reaktionslösungen erst gar nicht auszubilden vermögen.

Eine diesbezügliche Lehre wird auch nicht in der Deutschen Offenlegungsschrift 2 607 122 gegeben, aus der die Herstellung von Azofarbstoffen durch Diazotierung und Kupplung in Gegenwart von anionischen Dispergiermitteln bekannt ist. In diesem Verfahren werden die anionischen Dispergiermittel in Form ihrer Säuren eingesetzt, um die für die Diazotierung notwendige anorganische Säure zu ersetzen mit dem Ziel, salzfreie Farbstoffpräparationen zu erhalten. Die hierfür erforderlichen großen Mengen an Dispergiermittelsäuren und die damit verbundene hohe Belastung der Färbereiabwässer an organischem Material sind aus ökologischer Sicht von Nachteil.

Auch die Deutsche Offenlegungsschrift 2 313 003 liefert keine Hinweise zur Auffindung eines problemlos durchzuführenden Verfahrens der Diazotierung und Kupplung in hochkonzentrierter Lösung. Dort wird ein Verfahren zur Herstellung von dispergierbaren festen Präparationen von wasserunlöslichen Dispersionsfarbstoffen beschrieben, bei welchem die Kupplungsreaktion in Gegenwart von anionischen Dispergiermitteln durchgeführt wird; hierbei erhält man die Azofarbstoffe in Form der Dispersionen. Das zu Beginn der Farbstoffsynthese zugesetzte Dispergiermittel dient lediglich der leichteren Dispergierung des gebildeten Farbstoffpulvers in Wasser bei der Zubereitung von Färbedispersionen.

Eine andere Methode, das Auftreten von zähpastösen Zuständen im Diazotierungsansatz bei der Diazotierung von 1-Amino-2-naphthol-4-sulfonsäure möglichst zu vermeiden, ist aus der US-PS 2 812 321

bekannt, gemäß der Polyoxyethylen-fettsäureester dem Reaktionsansatz zur Diazotierung des Aminonaphthols zugegeben werden. Die viskositätsmindernde Wirkung dieser polyoxethylierten Fettsäuren ist jedoch noch unzureichend.

Nach der US-PS 4 082 742 dient ein Ethylenglykol/Wasser-Gemisch als Verdünnungsmittel zur Viskositätsreduzierung in der Kupplungsreaktion.

Mit der vorliegenden Erfindung wurde nun gefunden, daß man überraschenderweise die Diazotierungs- und Kupplungsreaktionen in hochkonzentrierten Lösungen dieser Ausgangskomponenten durchführen kann und auf diese Weise hochkonzentrierte wäßrige Lösungen von anionischen Azofarbstoffen, vorzugsweise solchen, die eine faserreaktive Gruppe besitzen, oder ein Gemisch einer hochkonzentrierten Farbstofflösung mit einer Suspension des Farbstoffes auf technisch einfache, kostengünstige, gut reproduzierbare und vor allem umweltschonende Weise herstellen kann, wenn man die Diazotierungs- und/oder Kupplungsreaktion in wäßrigem Medium in Gegenwart eines der nachstehend angegebenen Hilfsmittel, das eine viskositätsmindernde Wirkung auf die bei hohen Konzentrationen auftretenden zähpastösen Phasen ausübt, durchführt. Durch diese Maßnahmen werden pastöse Reaktionsmischungen mit den erwähnten gravierenden Nachteilen vermieden, und die Diazotierungs- und Kupplungsreaktionen können schnell und weitgehend vollständig, ohne Bildung von umweltbelastenden Nebenprodukten, ablaufen.

Die vorliegende Erfindung betrifft deshalb insbesondere ein Verfahren zur Herstellung von konzentrierten wäßrigen Farbstofflösungen von anionischen Farbstoffen mit einem Farbstoffgehalt von vorzugsweise 15 bis 40 Gew.-%, insbesondere bevorzugt 15 bis 35 Gew.-% und insbesondere zwischen 20 und 30 Gew.-%, das dadurch gekennzeichnet ist, daß man die Diazotierung des als Diazokomponente dienenden aromatischen Amins und/oder die Umsetzung der Diazoniumverbindung des aromatischen Amins mit der Kupplungskomponente in wäßrigem Medium bei einer Gesamtkonzentration an Diazonium- und Kupplungsverbindung von mindestens 10 Gew.-%, vorzugsweise von 15 bis 40 Gew.-% und insbesondere bevorzugt von 15 bis 35 Gew.-%, bezogen auf die wäßrige Syntheselösung, in Gegenwart eines Hilfsmittels, ausgewählt aus der Gruppe der Ligninsulfonate, der Polycarboxylate, wie Polyacrylate und Copolymerisate aus Maleinsäureanhydrid und Methylvinylether oder Methacrylsäure, Maleinsäure und Acrylsäure, der Copolymerisate aus ungesättigten Sulfonsäuren, wie Allylsulfonsäure oder Acrylamidomethylpropansulfonsäure, mit Acrylsäure, der Kondensationsprodukte aus Phenolen, wie Kresolen, mit Formaldehyd und Alkalisulfiten, der Kondensationsprodukte aus Naphthalinsulfonsäuren oder Monoalkyl- und Dialkylnaphthalinsulfonsäuren mit Formaldehyd, jeweils mit einem Sulfierungsgrad von 80 bis 200 %, vorzugsweise 80 bis 150 %, und einem mittleren Molgewicht von 350 bis 35 000, von Ditolylethersulfonsäuren und Formaldehyd, von Diphenylethersulfonsäuren und Formaldehyd und von Terphenylsulfonsäuren und Formaldehyd, der Mischkondensationsprodukte aus den vorstehend genannten aromatischen Sulfonsäuren mit Formaldehyd, der Sulfobernsteinsäurederivate von oxethylierten Nonylphenol-Formaldehyd-Kondensationsprodukten und Sulfobernsteinsäurehalbester-Verbindungen der allgemeinen Formel (a)

$$A - (X - O)_n - CO - B \qquad (a)$$

in welcher X Ethylen oder Propylen ist, n eine ganze Zahl von 2 bis 25 ist, B eine Gruppe der Formel (b) oder (c)

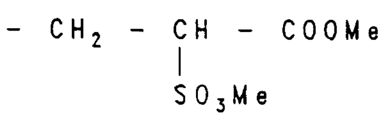

(b)

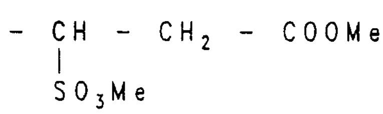

(c)

ist, worin Me Wasserstoff oder ein Alkalimetall bedeuten und A eine Gruppe der allgemeinen Formel (d) oder (e)

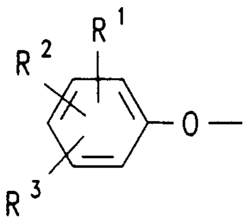

(d)

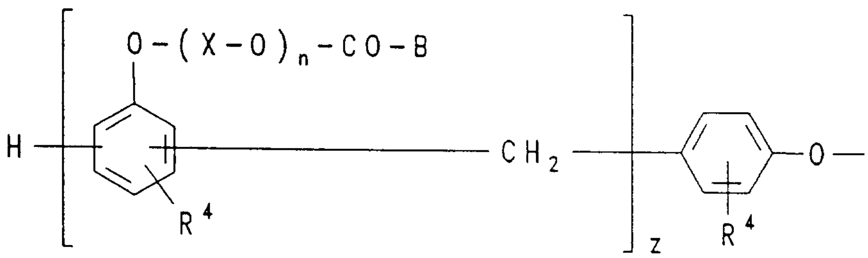

(e)

ist, in welchen X, n und B eine der obengenannten Bedeutungen haben, $R^1$ Alkyl von 4 bis 14 C-Atomen ist, $R^2$ und $R^3$ jedes Wasserstoff oder Alkyl von 4 bis 14 C-Atomen ist, $R^4$ Alkyl von 6 bis 14 C-Atomen ist und z für eine ganze Zahl von 1 bis 9 steht, oder aus einem Gemisch solcher Verbindungen, durchführt.

Verbindungen dieser Art sind beispielsweise in den Deutschen Offenlegungsschriften Nrs. 2 635 820, 2 820 717 und 3 111 488 sowie in der Europäischen Patentanmeldungs-Veröffentlichung Nr. 0 014 326 A und in der Deutschen Patentschrift 2 132 403 beschrieben.

Die erfindungsgemäß verwendbaren Hilfsmittel können in Form ihrer Säuren oder als wasserlösliche Salze, wie insbesondere Alkalisalze, wie beispielsweise Kalium- und insbesondere Natriumsalze, und ebenso einzeln oder zu zweien oder mehreren, wie in Mischung, eingesetzt werden.

Die Erfindung betrifft deshalb auch die Verwendung solcher Hilfsmittel zur Verhinderung stark viskoser Zustände in dem Reaktionsansatz während der Herstellung von Azofarbstoffen durch Diazotierung und Kupplung in konzentrierten, wäßrigen Lösungen.

Die Diazotierungs- und Kupplungsreaktionen werden im erfindungsgemäßen Verfahren analog den bekannten Verfahrensweisen und -bedingungen durchgeführt, so die Diazotierungsreaktion des als Diazokomponente dienenden aromatischen Amins mittels salpetriger Säure (wie beispielsweise Nitrosylschwefelsäure oder mittels Natriumnitrit und einer wäßrigen Säure, wie bspw. abfiltrierbare saure Ionenaustauscher mit Sulfo- und/oder Carboxygruppen als Säurespender, Schwefelsäure oder niedere aliphatische Carbonsäuren, vorzugsweise Salzsäure) bei einer Temperatur zwischen -5 °C und + 20 °C und bei einem pH-Wert unterhalb 2, und die Kupplungsreaktion ebenfalls im wäßrigen Medium bei einer Temperatur zwischen 5 und 30 °C und, sofern es sich um eine aminogruppenhaltige Kupplungskomponente handelt, bei einem pH-Wert zwischen 0,5 und 4, und sofern es sich uni eine hydroxygruppenhaltige Kupplungskomponente handelt, bei einem pH-Wert zwischen 2 und 7,5. Insbesondere vorteilhaft zeigt sich das erfindungsgemäße Verfahren bei den Diazotierungsreaktionen und/oder den im sauren Bereich ablaufenden Kupplungsreaktionen.

Das erfindungsgemäß eingesetzte Hilfsmittel mit viskositätsmindernder Wirkung oder ein Gemisch solcher Hilfsmittel wird bei den Diazotierungs- und Kupplungsreaktionen in einer Gesamtmenge von 0,01 bis 10 Gew.-%, vorzugsweise zwischen 0,05 und 5 Gew.-%, bezogen auf das Gewicht des herzustellenden Azofarbstoffes, in die Syntheselösung eingesetzt. Die erfindungsgemäß verwendeten Hilfsmittel können den Syntheselösungen vor oder während der Diazotierungsreaktion oder, falls nur die Kupplungsreaktion mit deren Hilfe durchgeführt werden soll, nach der Diazotierungsreaktion der gebildeten Diazoniumsalzlösung oder -suspension oder erst bei Bereitung des Kupplungsgemisches oder der Kupplungskomponente selbst oder während der Kupplungsreaktion zugesetzt werden. Die Auswahl eines für die jeweilige Diazotierungs- und/oder Kupplungsreaktion optimal wirksamen Hilfsmittels oder Hilfsmittelgemisches und die hierfür mindestens erforderlichen Substanzmengen können jeweils durch einfache Vorversuche ermittelt werden.

Das erfindungsgemäße Verfahren erlaubt es, in einfacher und kostengünstiger Weise direkt sowohl im Einzelansatz als auch in der kontinuierlichen Verfahrensweise zu konzentrierten wäßrigen Lösungen von Azofarbstoffen zu gelangen. Diese synthesemäßig erhaltenen wäßrigen Lösungen können direkt als Handelsware in üblicher Weise zur Herstellung von Färbebädern, Färbeflotten und Druckpasten verwendet werden. Falls erforderlich, werden sie gemäß bekannten Maßnahmen zur Verbesserung der Stabilität, insbesondere Lagerstabilität, mit üblichen Hilfsmitteln versetzt und/oder auf einen bestimmten pH-Bereich eingestellt. Solche Hilfsmittel sind beispielsweise Puffersubstanzen, die insbesondere bei faserreaktiven Farbstoffen einen pH-Wert zwischen 4 und 7 einzuhalten vermögen, wie beispielsweise Alkaliborate, Alkaliacetate und Gemische aus den primären und sekundären Alkaliphosphaten, oder auch löslichkeitserhöhende Verbindungen, wie ε-Caprolactam, Tetramethylharnstoff, Tetramethylensulfon und Dimethylformamid, des weiteren Harnstoff, Thioharnstoff, Pyridin und Formamid; diese Verbindungen können gegebenenfalls auch bereits während der Kupplungsreaktion zugesetzt werden. Weitere übliche Hilfsmittel, die den erfindungsgemäß hergestellten Farbstofflösungen zugesetzt werden können, sind beispielsweise Gefrierschutzmittel, schaumdämpfende Mittel, Tenside und Antimikrobika.

Die erfindungsgemäß herstellbaren Azofarbstoffe sind Mono- und Disazofarbstoffe oder Trisazofarbstoffe; sie können faserreaktive Gruppen enthalten und gegebenenfalls nach ihrer Synthese in Metallkomplex-Derivate, wie in ihre 1:1-Kupfer, 1:2-Chrom- und 1:2-Kobaltkomplex-Azofarbstoffe, übergeführt werden.

Faserreaktive Gruppen sind beispielsweise solche aus der Vinylsulfonyl- und Vinylsulfonylamid-Reihe, der halogensubstituierten s-Triazinylamino- und der halogensubstituierten Pyrimidylamino-Reihe und aus der Reihe der ggfs. halogensubstituierten aliphatischen Carbonsäureamide, wie der Chloracetylamid-, der Acryloylamid, der β-Brompropionylamid oder der α,β-Dibrom-propionylamid-Rest Diese faserreaktiven Gruppen können außer über eine Aminogruppierung auch über ein aliphatisches, aromatisches oder araliphatisches Brückenglied oder über ein mit einem Carbonamid- oder Sulfonamid-Rest verbundenen Alkylenrest als Brückenglied an den eigentlichen Farbstoffrest gebunden sein. Solche faserreaktiven Gruppierungen sind zahlreich in der Literatur bekannt, wie beispielsweise aus den deutschen Offenlegungsschriften Nrs. 2 201 280 und 2 927 102, den deutschen Auslegeschriften Nrs. 1 265 698 und 2 614 550 und den europäischen Patentanmeldungsveröffentlichungen Nrs. 0 040 806, 0 040 790, 070 807, 0 141 367, 0 144 766, 0 361 440, 0 374 758 und 0 377 166 sowie der in diesen Schriften erwähnten Literatur.

Faserreaktive Gruppen per se sind beispielsweise Gruppen entsprechend den allgemeinen Formeln (1a), (1b), (2a), (2b), (2c) und (3)

$-SO_2-X$ (1a)

$-N-SO_2-X$ (1b)
R

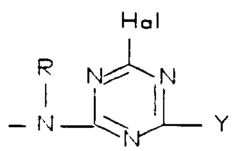

(2a)

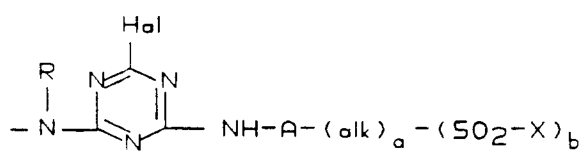

(2b)

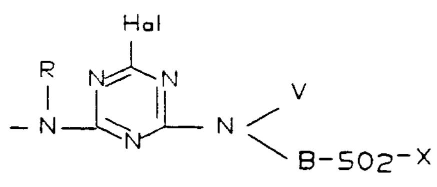

(2c)

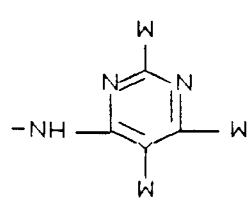

(3)

in welchen

| | |
|---|---|
| X | Vinyl ist oder Ethyl ist, das in β-Stellung durch einen Substituenten substituiert ist, der durch ein Alkali unter Bildung der Vinylgruppe eliminierbar ist, |
| R | Wasserstoff oder Alkyl von 1 bis 4 C-Atomen, wie Ethyl und insbesondere Methyl, ist, |
| Hal | Halogen bedeutet, wie Brom und insbesondere Fluor oder Chlor, |

Y Chlor, Sulfo, Cyanamido oder eine Aminogruppe entsprechend der allgemeinen Formel $-NR^{\alpha}R^{\beta}$ ist, in welcher

$R^{\alpha}$ Wasserstoff oder Alkyl von 1 bis 6 C-Atomen, bevorzugt von 1 bis 4 C-Atomen, wie Ethyl und Methyl, ist, das substituiert sein kann, wie beispielsweise durch 1 oder 2 Substituenten aus der Gruppe Hydroxy, Sulfato, Phosphato, Sulfo, Carboxy, Acetyloxy, Cyano und Phenyl, und

$R^{\beta}$ Wasserstoff, Alkyl von 1 bis 6 C-Atomen, bevorzugt von 1 bis 4 C-Atomen, wie Ethyl und Methyl, ist, das substituiert sein kann, wie beispielsweise durch 1 oder 2 Substituenten aus der Gruppe Hydroxy, Sulfato, Phosphato, Sulfo, Carboxy, Acetyloxy, Cyano und Phenyl, oder Cycloalkyl von 5 bis 8 C-Atomen, wie Cyclopentyl, Cyclohexyl und Dimethylcyclohexyl, oder Mono-, Di- oder Trisulfonaphthyl oder Phenyl ist, das durch 1, 2 oder 3 Substituenten aus der Gruppe Sulfo, Carboxy, Chlor, Nitro, Ethyl, Methyl, Methoxy und Ethoxy substituiert sein kann, oder

$-NR^{\alpha}R^{\beta}$ zusammen einen gesättigten, 1 oder 2 niedere Alkylengruppen und gegebenenfalls eine weitere Heterogruppe, wie ein N-, O- oder S-Atom oder NH, enthaltenden heterocyclischen Rest bilden, wie den Morpholino-, Piperidino- oder Piperazino-Rest,

A einen Benzol- oder Naphthalinring bedeutet, die substituiert sein können, wobei der Naphthalinring bevorzugt durch 1 oder 2 Sulfogruppen substituiert sein kann und die Substituenten des Benzolringes, bevorzugt drei und insbesondere 1 oder 2 Substituenten, bevorzugt solche aus der Gruppe Sulfo, Carboxy, Chlor, Methyl, Ethyl, Methoxy und Ethoxy sind, alk ein Alkylen von 1 bis 4 C-Atomen oder ein Alkylen von 2 bis 8 C-Atomen ist, das durch 1 oder 2 Heterogruppen, wie Sauerstoffatome und Aminogruppen, unterbrochen ist,

a die Zahl Null oder 1 ist,

b die Zahl 1 oder 2 ist,

B Alkylen von 1 bis 4 C-Atomen, wie Ethylen, oder ein Alkylen von 2 bis 8 C-Atomen ist, das durch 1 oder 2 Heterogruppen, wie Sauerstoffatome und Aminogruppen, unterbrochen ist,

V Wasserstoff oder Alkyl von 1 bis 4 C-Atomen ist, das durch 1 oder 2 Substituenten aus der Gruppe Hydroxy, Cyano, Sulfo, Sulfato, Carboxy, Phosphato, Acetyloxy oder Phenyl substituiert sein kann, oder ein Rest der Formel $-B-SO_2-X$ mit B und X der obengenannten Bedeutung ist, und

W jedes, unabhängig voneinander, Halogen ist, wie Brom oder insbesondere Fluor oder Chlor, oder Phenylsulfonyl oder Alkylsulfonyl von 1 bis 4 C-Atomen ist, wobei mindestens ein W Halogen ist.

Alkalisch eliminierbare Substituenten, die in β-Stellung der für das Formelglied X benannten Ethylgruppe stehen, sind beispielsweise Alkanoyloxygruppen von 2 bis 5 C-Atomen, wie die Acetyloxygruppe, Aroyloxygruppen, wie die Sulfobenzoyloxy- oder Carboxybenzoyloxy-Gruppe, Trialkylammoniumgruppen mit Alkylresten mit 1 bis 4 C-Atomen, wie die Trimethylammoniumgruppe, das Chloratom, das Bromatom, Alkylsulfonyloxygruppen von 1 bis 4 C-Atomen, wie die Methylsulfonyloxygruppe, und insbesondere eine Phosphato-, Thiosulfato- und Sulfatogruppe. Bevorzugt ist der Rest X die Vinylgruppe und insbesondere die β-Thiosulfatoethyl, β-Chlorethyl- und β-Sulfatoethyl-Gruppe.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , in welchen M jeweils Wasserstoff oder ein Alkalimetall, wie Natrium, Kalium und Lithium, bedeutet.

Anionische Azofarbstoffe, die nach dem erfindungsgemäßen Verfahren in Form ihrer konzentrierten wäßrigen Farbstofflösungen hergestellt werden können, sind beispielsweise solche, die den allgemeinen Formeln (4a) und (4b)

D - N = N - K (4a)

D - N = N - E - N = N - K (4b)

entsprechen, in welchen bedeuten:

D ist ein Rest der allgemeinen Formel (5a) oder (5b)

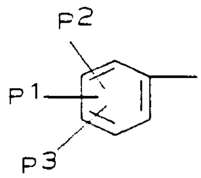 (5a) 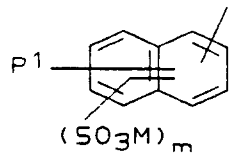 (5b)

in welchen

$P^1$ Wasserstoff, Sulfo oder eine faserreaktive Gruppe ist, wie beispielsweise eine Gruppe der oben angegebenen allgemeinen Formel (1a), (1b), (2a), (2b), (2c) oder (3), wobei die faserreaktive Gruppierung $P^1$ auch über ein Brückenglied, wie bspw. einen Alkylenrest von 1 bis 4 C-Atomen, an den Benzol- bzw. Naphthalinkern gebunden sein kann,

$P^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$P^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist oder eine faserreaktive Gruppierung der allgemeinen Formel $-(CH_2)_c-SO_2-X$ ist, worin c eine Zahl von Null bis 4 bedeutet und X die obengenannte Bedeutung besitzt, wobei jedoch $P^3$ diese faserreaktive Gruppierung nicht sein darf, falls $P^1$ eine andere faserreaktive Gruppierung als die Gruppierung der Formel $-(CH_2)_c-SO_2-X$ mit c und X der oben angegebenen Bedeutung ist,

wobei der Benzol- oder Naphthalinkern außerdem in orthoStellung zur $NH_2$-Gruppe eine Hydroxygruppe enthalten kann,

m die Zahl Null, 1 oder 2 bedeutet (wobei diese Gruppe im Falle von m gleich Null ein Wasserstoffatom bedeutet) und

M Wasserstoff oder ein Alkalimetall, wie Natrium, Kalium oder Lithium, ist;

E ist ein Rest der allgemeinen Formel (6a), (6b) oder (6c)

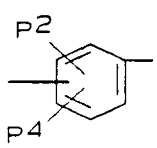 (6a) 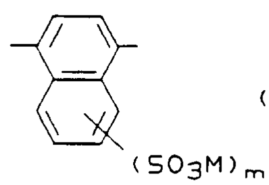 (6b) 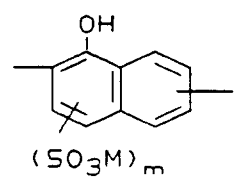 (6c)

in welchen

$P^2$ und M sowie m die oben angegebenen Bedeutungen haben,

$P^4$ Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder eine Alkylsulfonyl von 1 bis 4 C-Atomen ist;

K ist ein Rest der allgemeinen Formel (7a), (7b), (7c), (7d), (7e), (7f), (7g), (7h), (7i), (7k), (7m), (7n), (7p), (7g), (7r), (7s) oder (7t)

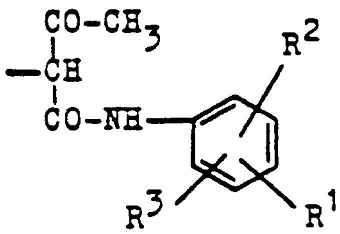

(7a)

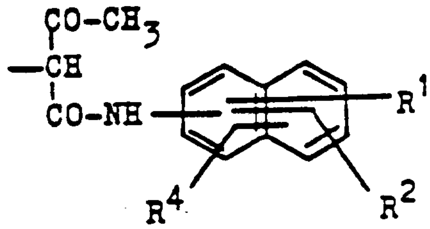

(7b)

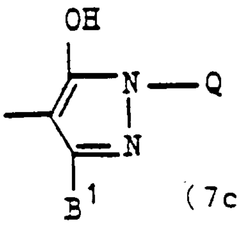

(7c)

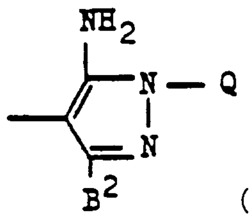

(7d)

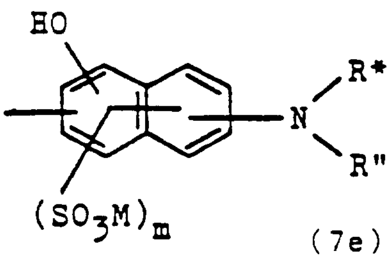

(7e)

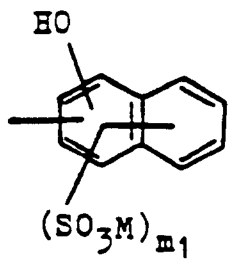

(7f)

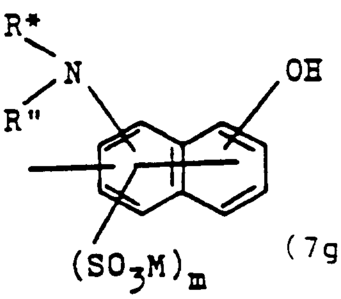

(7g)

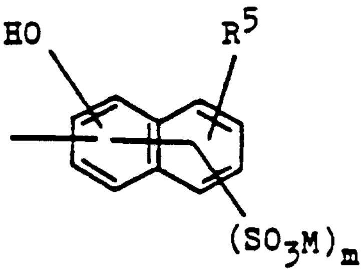

(7h)

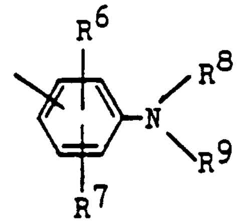

(7i)

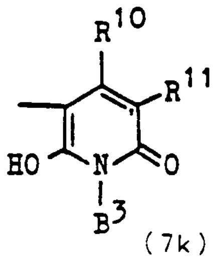

(7k)

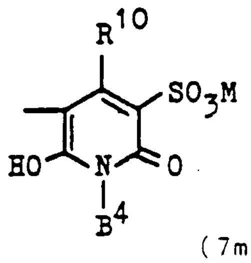

(7m)

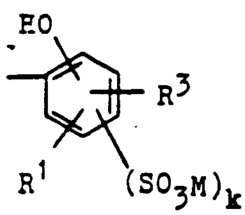

(7n)

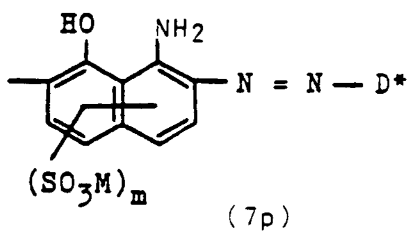

(7p)

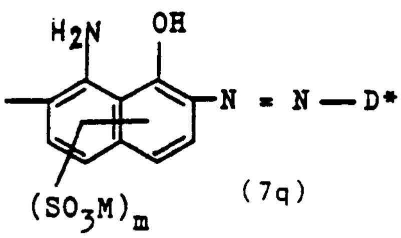

(7q)

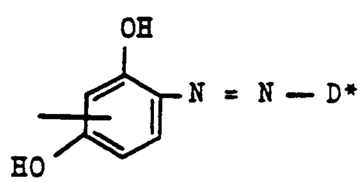

(7r)

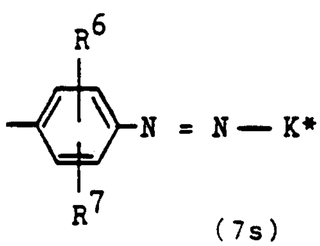

(7s)

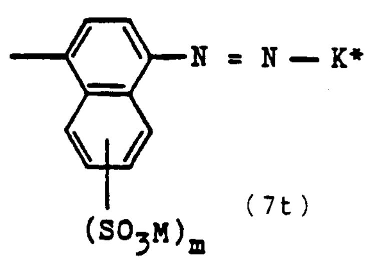

(7t)

in welchen bedeuten:

$R^1$ ist Wasserstoff, Carboxy, Sulfo oder eine faserreaktive Gruppe, wie beispielsweise eine Gruppe der obengenannten allgemeinen Formel (1a), (1b), (2a), (2b), (2c) oder (3), wobei die faserreaktive Gruppe auch über einen Alkylenrest von 1 bis 4 C-Atomen als Brückenglied an den Benzol- bzw. Naphthalinring gebunden sein kann;

$R^2$ ist Wasserstoff, Alkyl von 1 bis 4 C-Atomen, wie Methyl und Ethyl, Alkoxy von 1 bis 4 C-Atomen, wie Methoxy und Ethoxy, Chlor, Brom, Carboxy, Sulfo oder Nitro oder ist eine faserreaktive Gruppierung der al gemeinen Formel $-(CH_2)_c-SO_2-X$ mit c und X der obengenannten Bedeutung, wobei jedoch $R^2$ diese faserreaktive Gruppierung nicht sein darf, falls $R^1$ eine andere faserreaktive Gruppierung als eine Gruppe der allgemeinen Formel $-(CH_2)_c-SO_2-X$ ist;

$R^3$ ist Wasserstoff, Alkyl von 1 bis 4 C-Atomen, wie Methyl und Ethyl, Alkoxy von 1 bis 4 C-Atomen, wie Methoxy und Ethoxy, Chlor oder Brom;

$R^4$ ist Wasserstoff oder Sulfo;

$B^1$ ist Alkyl von 1 bis 4 C-Atomen, wie Methyl, Carboxy, Carbalkoxy 2 bis 5 C-Atomen, wie Carbomethoxy und Carbethoxy, Carbamoyl, Phenyl oder durch Sulfo, Carboxy, Methyl, Ethyl, Methoxy, Ethoxy und/oder Chlor substituiertes Phenyl;

$B^2$ ist Alkyl von 1 bis 4 C-Atomen, wie Methyl, Carboxy, Carbalkoxy von 2 bis 5 C-Atomen, wie Carbomethoxy und Carbethoxy, Carbamoyl, Phenyl oder durch 1 oder 2 Substituenten aus der Gruppe Alkyl von 1 bis 4 C-Atomen, Alkoxy von 1 bis 4 C-Atomen, Chlor, Brom und Sulfo substituiertes Phenyl;

Q ist Phenyl, das substituiert sein kann, wie beispielsweise durch 1, 2 oder 3, bevorzugt 1 oder 2, Substituenten aus der Gruppe Chlor, Brom, Methyl, Ethyl, Methoxy, Ethoxy, Carboxy, Sulfo und Alkanoylamino von 2 bis 5 C-Atomen, wie Acetylamino, und/oder durch eine faserreaktive Gruppe, wie beispielsweise durch eine der oben angegebenen Formeln (1), (2) und (3), oder ist Naphthyl, das durch 1, 2 oder 3 Sulfo und gegebenenfalls durch 1 Alkyl von 1 bis 4 C-Atomen, 1 Alkoxy von 1 bis 4 C-Atomen, 1 Chlor oder 1 Alkanoylamino von 2 bis 5 C-Atomen und/oder durch eine faserreaktive Gruppe, wie beispielsweise eine solche der obengenannten allgemeinen Formeln (1), (2) und (3) substituiert sein kann;

R* ist Wasserstoff oder Alkyl von 1 bis 4 C-Atomen, das durch Phenyl oder durch Sulfo und/oder $-SO_2-X$ mit X der obigen Bedeutung substituiertes Phenyl substituiert sein kann;

R" ist Wasserstoff oder Alkyl von 1 bis 4 C-Atomen, das durch Phenyl, Sulfophenyl oder eine Gruppe der Formel $-SO_2-X$ mit X der obigen Bedeutung substituiert sein kann, oder ist Phenyl oder durch 1 oder 2 Substituenten aus der Gruppe Alkyl von 1 bis 4 C-Atomen, Alkoxy von 1 bis 4 C-Atomen, Chlor, Brom, Sulfo und $-SO_2-X$ mit X der obigen Bedeutung substituiertes Phenyl;

$R^5$ ist Phenylureido, dessen Phenylrest durch eine Gruppe der Formel $-SO_2-X$ mit X der obigen Bedeutung substituiert sein kann, oder ist Alkanoylamino von 2 bis 5 C-Atomen, wie Acetylamino oder Propionylamino, das im Alkylrest durch eine Gruppe der Formel $-SO_2-X$ mit X der obigen Bedeutung substituiert sein kann, oder ist Alkenoylamino von 3 bis 5 C-Atomen, wie Acryloylamino, oder ist Benzoylamino, das durch Substituenten aus der Gruppe Chlor, Methyl, Methoxy, Nitro, Sulfo, Carboxy und $-SO_2-X$ mit X der obigen Bedeutung substituiert sein kann, und ist bevorzugt Acetylamino oder Benzoylamino;

$R^6$ ist Wasserstoff, Alkyl von 1 bis 4 C-Atomen, Alkoxy von 1 bis 4 C-Atomen, Sulfo, Carboxy, Carbalkoxy von 2 bis 5 C-Atomen, wie Carbomethoxy und Carbethoxy, Halogen, wie Brom oder Chlor, oder Alkoxy von 1 bis 4 C-Atomen, das durch Hydroxy, Acetyloxy, Carboxy, Carbamoyl, Cyano oder Halogen, wie Chlor, substituiert ist;

$R^7$ ist Wasserstoff, Alkyl von 1 bis 4 C-Atomen, Alkoxy von 1 bis 4 C-Atomen, Halogen, wie Brom oder Chlor, Cyano, Trifluormethyl, Alkoxy von 1 bis 4 C-Atomen, das durch Hydroxy, Acetyloxy, Carboxy, Carbamoyl oder Cyano oder Halogen, wie Chlor, oder durch eine Gruppe der Formel $-SO_2-X$ mit X der obigen Bedeutung substituiert ist, oder ist Alkanoylamino von 2 bis 5 C-Atomen, das durch Chlor, Brom, Alkoxy von 1 bis 4 C-Atomen, Phenoxy, Phenyl, Hydroxy, Carboxy oder Sulfo oder eine Gruppe der Formel $-SO_2-X$ mit X der obigen Bedeutung substituiert sein kann, oder ist Alkenoylamino von 3 bis 5 C-Atomen, das durch Chlor, Brom, Carboxy oder Sulfo substituiert sein kann, oder ist Benzoylamino, das im Benzolkern substituiert sein kann, beispielsweise durch Substituenten aus der Gruppe Chlor, Methyl, Sulfo und eine Gruppe der Formel $-SO_2-X$ mit X der obigen Bedeutung, oder ist Alkylsulfonyl von 1 bis 4 C-Atomen oder Phenylsulfonyl, das im Benzolkern substituiert sein kann, beispielsweise durch Substituenten aus der Gruppe Chlor, Methyl, Sulfo und eine Gruppe der Formel $-SO_2-X$ mit X der obigen Bedeutung, oder ist Alkylsulfonylamino von 1 bis 4 C-Atomen, das durch Hydroxy, Sulfato, Chlor, Brom, Alkoxy von 1 bis 4 C-Atomen oder eine Gruppe der Formel $-SO_2-X$ mit X der

obigen Bedeutung substituiert sein kann, oder ist Phenylsulfonylamino, das im Benzolkern substituiert sein kann, beispielsweise durch Substituenten aus der Gruppe Chlor, Methyl, Sulfo und eine Gruppe der Formel $-SO_2-X$ mit X der obigen Bedeutung, oder ist Carbamoyl, das am Stickstoffatom durch 1 oder 2 Substituenten mono- oder disubstituiert sein kann, wobei die Substituenten der Gruppe Alkyl von 1 bis 4 C-Atomen, durch beispielsweise Hydroxy, Sulfo, Carboxy, Sulfato oder Phenyl oder eine Gruppe der Formel $-SO_2-X$ mit X der obigen Bedeutung substituiertes Alkyl von 1 bis 4 C-Atomen, Cycloalkyl mit 5 bis 8 C-Atomen, Phenyl und durch Substituenten, beispielsweise aus der Gruppe Chlor, Sulfo, Methyl, Methoxy, Carboxy und eine Gruppe der Formel $-SO_2-X$ mit X der obigen Bedeutung, substituiertes Phenyl angehören, oder ist Sulfamoyl, das am Stickstoffatom durch 1 oder 2 Substituenten mono- oder disubstituiert sein kann, wobei die Substituenten der Gruppe Alkyl von 1 bis 4 C-Atomen, durch Substituenten, beispielsweise aus der Gruppe Hydroxy, Sulfo, Carboxy, Sulfato oder Phenyl oder eine Gruppe der Formel $-SO_2-X$ mit X der obigen Bedeutung, substituiertes Alkyl von 1 bis 4 C-Atomen, Cycloalkyl mit 5 bis 8 C-Atomen, Phenyl und durch Substituenten, beispielsweise aus der Gruppe Chlor, Sulfo, Methyl, Methoxy, Carboxy und eine Gruppe der Formel $-SO_2-X$ mit X der obigen Bedeutung substituiertes Phenyl angehören, oder ist Ureido oder Ureido, das am endständigen Stickstoffatom durch 1 oder 2 Substituenten mono- oder disubstituiert sein kann, wobei die Substituenten der Gruppe Alkyl von 1 bis 4 C-Atomen, durch beispielsweise Hydroxy, Sulfo, Carboxy, Sulfato, Phenyl oder eine Gruppe der Formel $-SO_2-X$ mit X der obigen Bedeutungen substituiertes Alkyl von 1 bis 4 C-Atomen, Cycloalkyl mit 5 bis 8 C-Atomen, Phenyl und durch Substituenten, beispielsweise aus der Gruppe Chlor, Sulfo, Methyl, Methoxy, Carboxy und eine Gruppe der Formel $-SO_2-X$ mit X der obigen Bedeutung, substituiertes Phenyl angehören, oder $R^7$ ist eine faserreaktive Gruppierung aus der Halogen-s-triazinylamino- oder Halogenpyrimidinylamino-Reihe, beispielsweise eine faserreaktive Gruppierung der oben angegebenen allgemeinen Formel (2a), (2b), (2c) oder (3);

$R^8$ ist Wasserstoff oder Alkyl von 1 bis 4 C-Atomen, das durch beispielsweise Hydroxy, Sulfo, Carboxy, Sulfato, eine Gruppe $-SO_2-X$ mit X der obigen Bedeutung, Phenyl oder Sulfophenyl substituiert sein kann, oder ist Alkenyl von 2 bis 4 C-Atomen, das durch Carboxy, Sulfo, Chlor oder Brom substituiert sein kann, oder ist Cycloalkyl von 5 bis 8 C-Atomen;

$R^9$ ist Wasserstoff oder Alkyl von 1 bis 4 C-Atomen, das substituiert sein kann, beispielsweise durch Hydroxy, Sulfo, Carboxy, Sulfato, Phenyl oder $-SO_2-X$ mit X obiger Bedeutung, oder ist Alkenyl von 2 bis 5 C-Atomen, das durch Carboxy, Sulfo oder $-SO_2-X$ mit X obiger Bedeutung oder durch Chlor oder Brom substituiert sein kann, oder

$R^9$ ist Cycloalkyl von 5 bis 8 C-Atomen oder Phenyl, das substituiert sein kann, beispielsweise durch Substituenten aus der Gruppe Chlor, Sulfo, Methyl, Methoxy, Carboxy und $-SO_2-X$ mit X obiger Bedeutung, oder

$R^8$ und $R^9$ stellen zusammen mit dem Stickstoffatom und gegebenenfalls einem weiteren Heteroatom oder einer Heterogruppe, wie N, O, S und NH, einen 5- bis 8-gliedrigen, bevorzugt gesättigten, heterocyclischen Rest dar, wie beispielsweise den N-Piperidino-, N-Morpholino- oder N-Piperazinorest;

$R^{10}$ ist Wasserstoff oder Alkyl von 1 bis 4 C-Atomen oder durch Alkoxy von 1 bis 4 C-Atomen oder Cyan substituiertes Alkyl von 1 bis 4 C-Atomen;

$R^{11}$ ist Wasserstoff, Sulfo, Sulfoalkyl mit einem Alkylenrest von 1 bis 4 C-Atomen, wie Sulfomethyl, Cyano oder Carbamoyl;

$B^3$ ist Wasserstoff oder Alkyl von 1 bis 6 C-Atomen, bevorzugt von 1 bis 4 C-Atomen, das durch Phenyl, Sulfo, Sulfophenyl oder eine faserreaktive Gruppe, wie beispielsweise eine faserreaktive Gruppierung der oben angegebenen allgemeinen Formeln (1), (2) und (3), substituiert sein kann;

$B^4$ ist Wasserstoff oder Alkyl von 1 bis 4 C-Atomen, das unsubstituiert oder durch Alkoxy von 1 bis 4 C-Atomen, wie Methoxy, Sulfo, Carboxy, Sulfato, Acetylamino, Benzoylamino oder Cyano oder durch eine faserreaktive Gruppe, wie beispielsweise eine faserreaktive Gruppierung der oben angegebenen allgemeinen Formeln (1), (2) und (3), substituiert ist, oder ist Alkenyl von 2 bis 4 C-Atomen, Cyclohexyl oder Phenyl, das unsubstituiert oder durch Substituenten aus der Gruppe Carboxy, Sulfo, Benzoylamino, Acetylamino und Chlor und/oder durch eine faserreaktive Gruppe, wie beispielsweise eine faserreaktive Gruppierung der obengenannten Formeln (1), (2) und (3), substituiert ist;

k ist die Zahl Null oder 1 (wobei im Falle k = Null diese Gruppe für ein Wasserstoffatom steht);

m* ist die Zahl 1 oder 2;

$m_1$ ist die Zahl 1, 2 oder 3;

D* hat eine der für D angegebenen Bedeutungen, wobei D und D* zueinander gleiche oder voneinander verschiedene Bedeutungen besitzen können;

K* ist ein Rest aus einer der oben genannten und definierten allgemeinen Formeln (4a) bis (4m), wobei K und K* zueinander gleiche oder voneinander verschiedene Bedeutungen besitzen können;

M hat eine der oben genannten Bedeutungen.

Die einzelnen Formelglieder, auch die gegebenenfalls in ein und derselben Formel zweifach auftretenden Formelglieder, können im Rahmen ihrer Bedeutung zueinander gleiche oder voneinander verschiedene Bedeutungen besitzen.

Die in den obigen Formeln (7e), (7f), (7g), (7h), (7i) und (7n) befindlichen freien Bindungen, welche zur Azogruppe führen, bzw. die Azogruppe in Formel (7p) und (7q) befinden sich in ortho-Stellung zur Hydroxy- bzw. Aminogruppe gebunden. Bevorzugt steht diese Hydroxygruppe in α-Stellung an den Naphthalinrest gebunden.

Alkylgruppen von 1 bis 4 C-Atomen sind bevorzugt die Ethyl- und insbesondere die Methylgruppe; Alkoxygruppen von 1 bis 4 C-Atomen sind bevorzugt die Ethoxy- und insbesondere die Methoxygruppe; Alkanoylaminogruppen von 2 bis 5 C-Atomen sind bevorzugt die Propionylaminogruppe und insbesondere die Acetylaminogruppe und Carbalkoxygruppen von 2 bis 5 C-Atomen, bevorzugt die Carbomethoxy- und Carbethoxygruppe.

Faserreaktive Gruppierungen mit einem faserreakiven Rest der Vinylsulfon- oder Vinylsulfonamid-Reihe sind beispielsweise die β-Chlorethylsulfonyl-, β-Acetoxyethylsulfonyl-, β-(3-Sulfobenzoyloxy)-ethylsulfonyl-, β-Sulfatoethylsulfonyl-, β-Thiosulfatoethylsulfonyl-, β-Phosphatoethylsulfonyl-, N-Methyl-N-(β-sulfatoethylsulfonyl)-amido-, N-Methyl-vinylsulfonylamido-, γ-Vinylsulfonyl-propionylamido-, β-(β'-Chlorethylsulfonyl)-ethylamino-, γ-(β'-Chlorethylsulfonyl)-propionylamido-, δ-Vinylsulfonyl-butyrylamido, δ-(β'-Chlorethylsulfonyl)-butyrylamido-, β-(β'-Vinylsulfonyl-ethoxy)-ethylamino- oder 4-(β-Sulfatoethylsulfonyl)-phenylamino-Gruppen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

**Beispiel 1**

Man suspendiert 421,5 Teile 4-(β-Sulfatoethylsulfonyl)-anilin in einer Lösung von 10 Teilen des Natriumsalzes eines Naphthalinsulfonsäure-Formaldehyd-Kondensationsproduktes mit einem Sulfierungsgrad von etwa 90 bis 120 % und einer mittleren Molmasse von etwa 6.500 und von 7 Teilen des Natrium-Polyacrylates mit einer mittleren Molmasse von etwa 15.000 in 400 Teilen Wasser und stellt sodann mit etwa 92 Teilen Natriumcarbonat einen pH-Wert von etwa 5 ein. Man gibt 600 Teile Eis und 400 Teile einer wäßrigen 30 %igen Salzsäure hinzu und diazotiert die Anilinverbindung in üblicher Weise mittels 280 Teilen einer 38 %igen wäßrigen Natriumnitritlösung. In die erhaltene Diazoniumsalzsuspension gibt man sodann 239,4 Teile 1-Amino-8-naphthol-3,6-disulfonsäure und rührt den Ansatz noch mehrere Stunden unter Einhaltung des pH-Wertes von 1,3 mittels Natriumbicarbonat und bei etwa 15 °C nach.

Nach Beendigung der ersten Kupplungsreaktion stellt man den Ansatz mit etwa 80 Teilen Natriumcarbonat auf einen pH-Wert von 5. Man führt noch kurze Zeit bis zur Beendigung der Zweiten Kupplungsreaktion nach und klärt sodann die erhaltene Farbstofflösung durch Verrühren mit Kieselgur und Filtration.

Der Reaktionsansatz ist während der gesamten Reaktionszeiten der Diazotierungs und der beiden Kupplungsreaktionen leicht rührfähig.

Das Filtrat stellt eine wäßrige Farbstofflösung dar, die den Farbstoff der Formel

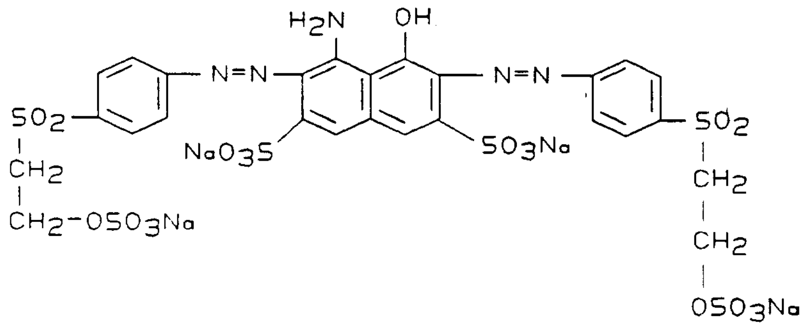

zu etwa 28 % enthält. Sie ist in einem weiten Temperaturbereich, so von etwa -5 °C bis +50 °C, über mehrere Wochen lagerstabil und färbt unter Anwendung der für faserreaktive Farbstoffe üblichen Applikations- und Fixiermethoden cellulosehaltige Materialien in marineblauen bis schwarzen Tönen.

**Vergleichsbeispiel A:**

Zur Herstellung des im Beispiel 1 formelmäßig angegebenen Disazofarbstoffes verfährt man gemäß der Verfahrensweise des Beispiels 1, führt die Synthese jedoch ohne das angegebene Hilfsmittelgemisch durch mit der Folge, daß die Umsetzung etwa 3 bis 4 Stunden nach der Zugabe der 1-Amino-8-naphthol-3,6-disulfonsäure abgebrochen werden muß, da der Reaktionsansatz so dickflüssig geworden ist, daß die für den Fortgang der Kupplungsreaktion erforderliche Durchmischung des Reaktionsansatzes nicht mehr möglich ist.

**Vergleichsbeispiel B:**

Man verfährt gemäß der Verfahrensweise des Vergleichsbeispiels A, gibt jedoch dem Ansatz im Verlauf der ersten Kupplungsreaktion Wasser hinzu, um eine gleich gute Rührfähigkeit wie bei der Farbstoffsynthese des Beispiels 1 zu erreichen. Hierfür ist es erforderlich, den Ansatz im Verlauf der ersten Kupplungsreaktion mit insgesamt 700 bis 800 Teilen Wasser zu verdünnen.

Im übrigen werden die beiden Kupplungsreaktionen gemäß den Angaben des Beispiels 1 durchgeführt. Man erhält eine Farbstofflösung, die den in Beispiel 1 angegebenen Disazofarbstoff nur zu 21,5 % enthält.

**Beispiele 2 bis 10**

Zur Herstellung des in Beispiel 1 formelmäßig angegebenen Disazofarbstoffs verfährt man gemäß den Angaben des Beispiels 1, setzt jedoch anstelle des dort verwendeten Hilfsmittelgemisches eines der in den nachfolgenden Tabellenbeispielen angegebenen Hilfsmittels oder Hilfsmittelgemisches ein. Man erhält eine wäßrige Lösung dieses Disazofarbstoffes in etwa gleicher Farbstoffkonzentration und bei guter Rührfähigkeit des Reaktionsansatzes während der Diazotierungs und Kupplungsreaktionen.

| Bsp. | Hilfsmittel(-gemisch) |
|---|---|
| 2 | 10 Teile eines Maleinsäure-Acrylsäure-Copolymerisats mit einer mittleren Molmasse von etwa 70.000 |
| 3 | 14 Teile eines Polyacrylats mit einer mittleren Molmasse von etwa 15.000 |
| 4 | 9 Teile eines Ligninsulfonats und 5 Teile eines Polyacrylats mit einer mittleren Molmasse von etwa 15.000 |
| 5 | 8 Teile eines Methylnaphthalinsulfonsäure-Formaldehyd-Kondensationsprodukts mit einem Sulfierungsgrad von 80 bis 120 % und einer mittleren Molmasse von etwa 3.000 und 5 Teile eines Polyacrylats mit einer mittleren Molmasse von etwa 15.000 |
| 6 | 8 Teile eines Ligninsulfonats und 7 Teile eines Naphthalinsulfonsäure-Formaldehyd-Kondensationsprodukts mit einem Sulfierungsgrad zwischen 80 bis 120 % und einer mittleren Molmasse von etwa 6.500 |
| 7 | 23 Teile eines Maleinsäure-Acrylsäure-Copolymerisats mit einer mittleren Molmasse von etwa 50.000 |

| Bsp. | Hilfsmittel(-gemisch) |
|---|---|
| 8 | 12 Teile eines Naphthalinsulfonsäure-Formaldehyd-Kondensationsproduktes mit einem Sulfierungsgrad von 80 bis 120 % und einer mittleren Molmasse von etwa 6.500 |
| 9 | 20 Teile eines Maleinsäure-Methylvinylether-Copolymerisats mit einer mittleren Molmasse von 70.000 |
| 10 | 8 Teile eines Maleinsäure-Methylvinylether-Copolymerisats mit einer mittleren Molmasse von 70.000 und 5 Teile eines Naphthalinsulfonsäure-Formaldehyd-Kondensationsprodukts mit einem Sulfierungsgrad von 80 bis 100 % und einer mittleren Molmasse von etwa 5.500 |

**Beispiel 11**

Man suspendiert 287 Teile 4-($\beta$-Sulfatoethylsulfonyl)-anilin in einer Lösung von 5 Teilen des Natriumsalzes einer Polyacrylsäure mit einer mittleren Molmasse von 15.000 und von 10 Teilen des Natriumsalzes eines Naphthalinsulfonsäure-Formaldehyd-Kondensationsprodukts mit einem Sulfierunggrad von 80 bis 120 % und einer mittleren Molmasse von etwa 6.500 in 500 Teilen Wasser. Durch Zugabe von 60 Teilen Natriumcarbonat stellt man einen pH-Wert von etwa 5,5 ein, gibt sodann 600 Teile Eis und 279 Teile einer 30 %igen wäßrigen Salzsäure hinzu und diazotiert die Anilinverbindung in üblicher Weise mittels 182 Teilen einer 38 %igen wäßrigen Natriumnitritlösung. Zu der erhaltenen Diazoniumsalzsuspension gibt man 319 Teile 1-Amino-8-naphthol-3,6-disulfonsäure und führt die Kupplungsreaktion während mehrerer Stunden bei einem pH-Wert von 1,3 und einer Temperatur von etwa 15 °C durch. Während der gesamten Reaktionszeit der Diazotierungs- und Kupplungsreaktion bleibt der Ansatz gut rührfähig.

Man erhält eine hochkonzentrierte Farbstofflösung, teilweise Suspension, des Monoazofarbstoffs der Formel

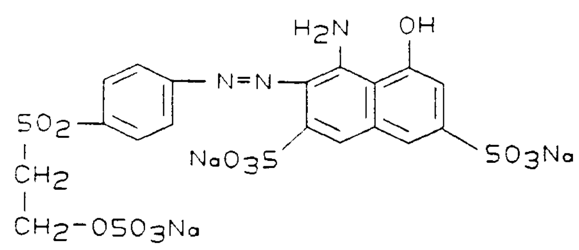

mit einem Gesamtfarbstoffgehalt von etwa 30 %, die, erforderlichenfalls nach Verdünnen mit Wasser, zur Bereitung der üblichen Färbebäder, Klotzflotten und Druckpasten geeignet ist.

**Beispiele 12 bis 20**

Zur Herstellung eines Disazofarbstoffs der allgemeinen Formel (A)

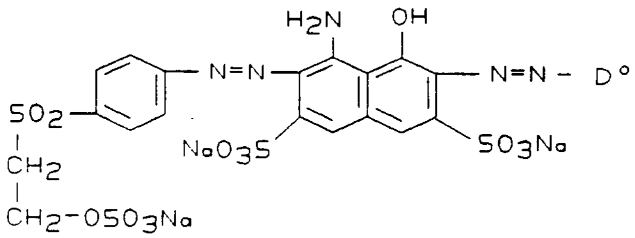

in welcher D° eine der in den nachstehenden Tabellenbeispielen angegebenen Bedeutungen hat, wobei M hier für ein Alkalimetall, wie Natrium, steht, verfährt man zunächst gemäß der Verfahrensweise des Beispiels 11 und setzt sodann zu der dort erhaltenen Lösung oder Suspension des Monoazofarbstoffs die wäßrige Lösung oder Suspension eines auf üblichem Weg erhaltenen Diazoniumsalzes eines aromatischen Amins der allgemeinen Formel D°-$NH_2$ mit D° der in dem jeweiligen Tabellenbeispiel angegebenen Bedeutung hinzu, stellt den Reaktionsansatz auf einen pH-Wert zwischen 4 und 6 und führt die zweite Kupplungsreaktion mit dieser zweiten Diazokomponente innerhalb dieses pH-Bereichs und einer Temperatur zwischen 12 und 20°C durch. Nach der üblichen Klärfiltration erhält man eine hochkonzentrierte Lösung, gegebenenfalls Suspension, dieses Disazofarbstoffs. Wie in der Reaktionsphase der ersten Kupplungsreaktion gemäß Beispiel 11 bleibt der Ansatz auch während der zweiten Kupplungsreaktion gut rührfähig.

| Bsp. | Rest D° |
|---|---|
| 12 | 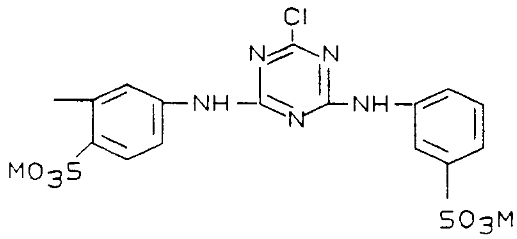 |
| 13 | 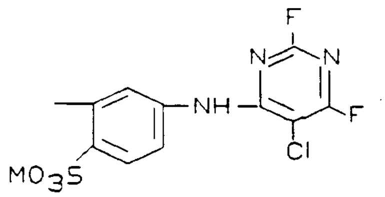 |
| 14 | 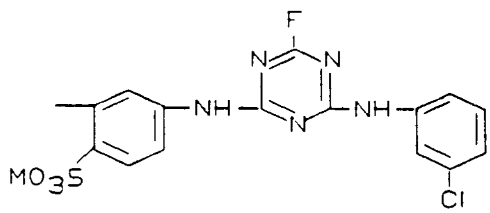 |
| 15 | 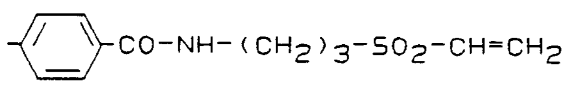 |
| 16 | 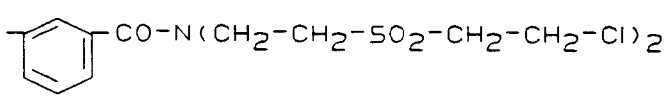 |
| 17 | 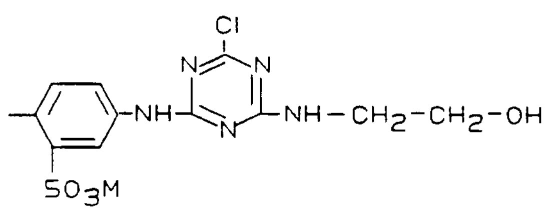 |
| 18 | 2-Methoxy-5-(β-sulfatoethylsulfonyl)-phenyl |

| Bsp. | Rest D° |
|---|---|
| 19 | 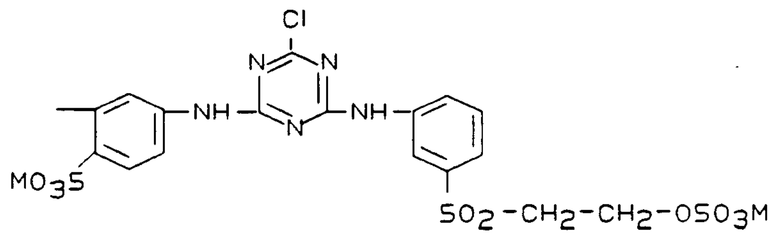 |
| 20 | 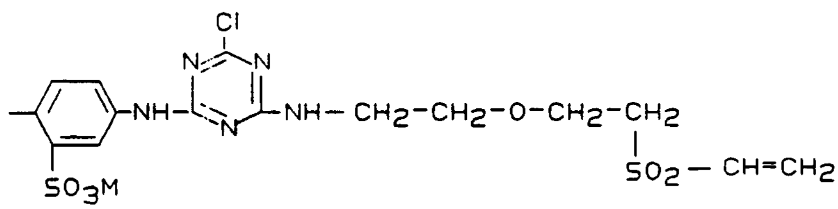 |

**Beispiel 21**

Man versetzt eine Lösung von 12 Teilen des Natriumsalzes eines Naphthalinsulfonsäure-Formaldehyd-Kondensationsprodukts mit einem Sulfierungsgrad von 80 bis 120 % und einer mittleren Molmasse von etwa 6.500 in 250 Teilen Wasser mit 287 Teilen 4-($\beta$-Sulfatoethylsulfonyl)-anilin und stellt mit etwa 60 Teilen Natriumcarbonat einen pH-Wert von etwa 5,5 ein. Sodann gibt man 400 Teile Eis und 279 Teile einer 30 %igen wäßrigen Salzsäure hinzu und diazotiert die Anilinverbindung in üblicher Weise mittels 182 Teilen einer etwa 38 %igen wäßrigen Natriumnitritlösung. Zu der so erhaltenen Diazoniumsalzsuspension gibt man 115,6 Teile 1-Amino-8-naphthol-3,6-disulfonsäure und führt die Kupplungsreation unter Einhaltung eines pH-Werts von 1,3 und einer Temperatur von etwa 10 °C durch. Die Kupplungsreaktion ist nach etwa 5 Stunden beendet. Während der gesamten Reaktionszeit war das Reaktionsgemisch gut rührfähig.

Zu der so hergestellten konzentrierten Lösung des Monoazofarbstoffs gibt man zur Synthese eines zweiten Monoazofarbstoffs zu dem noch vorhandenen, überschüssigen Diazoniumsalz 263 Teile einer wäßrigen Suspension von 75,9 Teilen 3-Acetylamino-8-naphthol-6-sulfonsäure hinzu, die durch Acetylierung einer wäßrigen Suspension des Natriumsalzes der 3-Amino-8-naphthol-6-sulfonsäure mit Essigsäureanhydrid erhalten wird. Anschließend wird durch langsame Zugabe von Natriumbicarbonat ein pH-Wert von 3 eingestellt und der Ansatz noch eine Stunde bei etwa 10 bis 14 °C unter Einhaltung des pH-Wertes von 3 weitergerührt. Zur Beendigung der Kupplungsreaktion stellt man sodann mittels Natriumbicarbonat einen pH-Wert von 4 bis 5 ein. Auch bei diesen Kupplungsreaktionen blieb der Reaktionsansatz gut rührfähig.

Nach Beendigung der Kupplungsreaktion klärt man die Lösung in üblicher Weise. Man erhält etwa 1.930 Teile einer wäßrigen Lösung eines Farbstoffgemisches der beide nachstehend angegebenen Farbstoffe der Formeln (I) und (II) im Verhältnis von (I) : (II) zu etwa 2:1 Teilen. Der Gesamtfarbstoffgehalt der Lösung beträgt etwa 27 %.

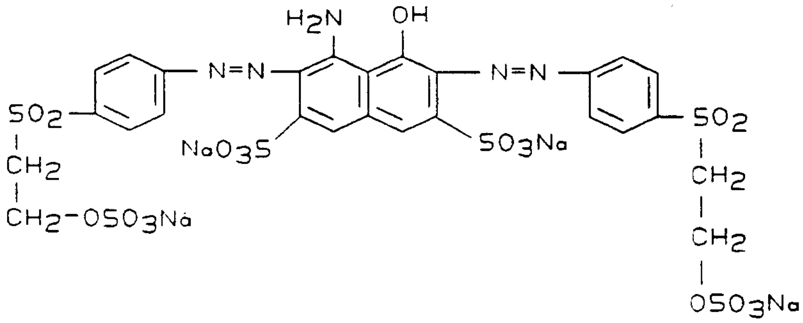

( I )

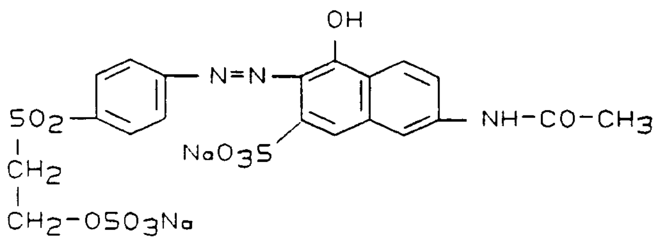

( I I )

Die so erhaltene konzentrierte wäßrige Lösung eines Farbstoffgemisches kann in üblicher Weise direkt zur Bereitung von wäßrigen Färbeflotten, Färbebädern oder Druckpasten verwendet werden oder üblicherweise durch den Zusatz entsprechender Hilfsmittel, wie Puffersubstanzen, in handelsübliche Flüssigpräparationen oder durch Sprühtrocknung in Farbstoffpulver oder -granulate übergeführt werden.

**Beispiel 22**

Man versetzt eine wäßrige Lösung von 5 Teilen des Natriumsalzes eines Naphthalinsulfonsäure-Formaldehyd-Kondensationsprodukts mit einem Sulfierungsgrad von 80 bis 120 % und einer mittleren Molmasse von etwa 900 in 500 Teilen Wasser mit 341 Teilen 2,5-Dimethoxy-4-(β-sulfatoethylsulfonyl)-anilin und stellt mittels 62 Teilen Natriumcarbonat einen pH-Wert von etwa 5,5 ein. Sodann gibt man 400 Teile Eis und 275 Teile einer etwa 30 %igen wäßrigen Salzsäure hinzu und diazotiert die Anilinverbindung in üblicher Weise bei einer Temperatur von 10 bis 12 °C mittels 180 Teilen einer etwa 38 %igen wäßrigen Natriumnitritlösung. Die so erhaltene Diazoniumsalzlösung wird mit der in Beispiel 11 hergestellten wäßrigen Lösung/Suspension des dort formelmäßig angegebenen Monoazofarbstoffs versetzt. Man führt die Kupplungsreaktion zum Disazofarbstoff nach Einstellung eines pH-Werts auf 5 bis 5,5 durch. Sowohl bei der Diazotierungsreaktion als auch bei der Kupplungsreaktion bleibt der Ansatz gut rührfähig. Die Kupplungsreaktion ist nach etwa 2 bis 4 Stunden beendet.

Nach der üblichen Klärfiltration erhält man etwa 4.100 Teile einer Farbstofflösung mit einem Gehalt von 25,6 % des Farbstoffs der Formel

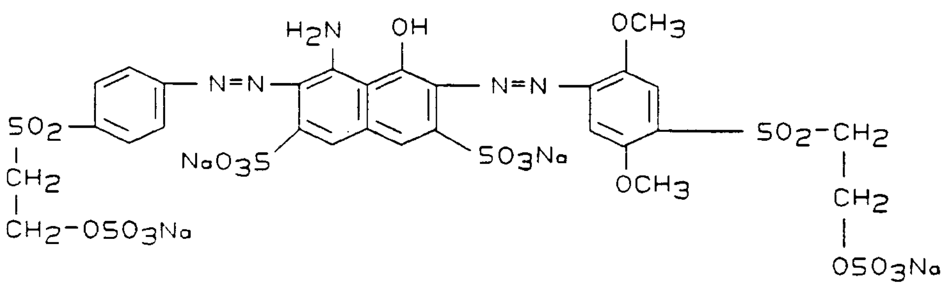

die in üblicher Weise zur Herstellung von Färbeflotten, Färbebädern oder Klotzflotten oder in eine handelsübliche Flüssigpräparation oder in ein Farbstoffpulver oder -granulat übergeführt werden kann.

**Beispiel 23**

Man suspendiert 421,5 Teile 4-(β-Sulfatoethylsulfonyl)-anilin in eine Lösung von 10 Teilen des Natriumsalzes eines Naphthalinsulfonsäure-Formaldehyd-Kondensationsprodukts mit einem Sulfierungsgrad von 80 bis 120 % und einer mittleren Molmasse von etwa 6.500 und 2 Teilen des Natriumsalzes einer Polyacrylsäure mit einer mittleren Molmasse von etwa 15.000 in 575 Teilen Wasser und stellt schließlich mittels 91 Teilen Natriumcarbonat einen pH-Wert von etwa 5 ein. Sodann gibt man 375 Teile Eis und 398 Teile einer etwa 30 %igen wäßrigen Salzsäure hinzu und diazotiert die Anilinverbindung in üblicher Weise mittels 288 Teilen einer etwa 38 %igen wäßrigen Natriumnitritlösung bei etwa 10 bis 15 °C. In die so erhaltenene Diazoniumsalzsuspension gibt man 252 Teile 1-Amino-8-naphthol-4,6-disulfonsäure und führt die erste Kupplungsreaktion während mehrerer Stunden unter Einhaltung eines pH-Werts von 1,3 und einer Temperatur von 15 °C zu Ende. Anschließend stellt man mittels etwa 75 Teilen Natriumcarbonat einen pH-Wert von 5 ein und führt die zweite Kupplungsreaktion zum Disazofarbstoff unter Einhaltung eines pH-Werts von 5 und einer Temperatur von 15 bis 20 °C während etwa einer Stunde durch. Sowohl während der Diazotierungsreaktion als auch während der beiden Kupplungsreaktionen traten keine viskose Phasen innerhalb des Reaktionsansatzes auf, sondern der Ansatz blieb über die ganze Zeit gut rührfähig.

Die erhaltene Farbstofflösung wird in üblicher Weise geklärt. Man erhält als Filtrat etwa 2.530 Teile einer wäßrigen Lösung mit einem Gehalt von 29 bis 30 % des Farbstoffs der Formel

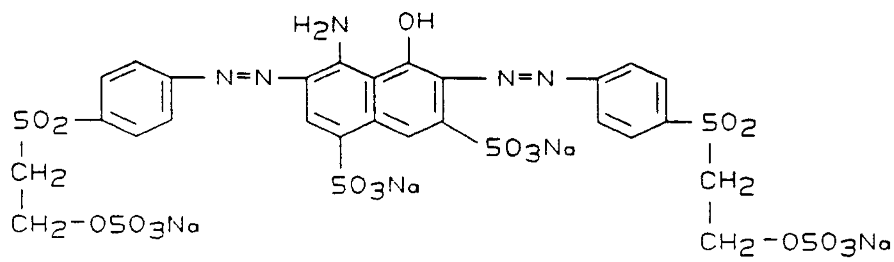

**Vergleichsbeispiel C**

Zur Herstellung einer konzentrierten Farbstofflösung verfährt man gemäß den Angaben des Beispiels 23, jedoch ohne Zusatz des in Beispiel 23 angegebenen Hilfsmittelgemisches. Nach Zugabe der 1-Amino-8-naphthol-4,6-disulfonsäurewird der Kupplungsansatz sehr bald viskos und verliert seine Rührfähigkeit. Um eine gute Rührfähigkeit zu erreichen, bei der die Farbstoffsynthese unter gleich guten Rührbedingungen abläuft wie die des Beispiels 23, müssen dem Reaktionsansatz insgesamt 2.000 Teile Wasser hinzugefügt werden. Auf diese Weise erhält man lediglich eine Farbstofflösung mit einem Farbstoffgehalt von etwa 17,5 %.

**Beispiel 24**

Man versetzt eine Lösung von 2 Teilen des Natriumsalzes eines Naphthalinsulfonsäure-Formaldehyd-Kondensationsprodukts mit einem Sulfierungsgrad von 80 bis 120 % und einer mittleren Molmasse von etwa 6.500 in 58 Teilen Wasser mit 72 Teilen 4-(β-Sulfatoethylsulfonyl)-anilin und stellt das Gemisch mittels 17 Teilen Natriumcarbonat auf einen pH-Wert von 5,5 bis 6 ein. Sodann gibt man 87 Teile Eis und 67 Teile einer 31 %igen wäßrigen Salzsäure hinzu und führt die Diazotierungsreaktion in üblicher Weise mittels 46 Teilen einer 38 %igen wäßrigen Natriumnitritlösung durch. Zu der so erhaltenen Diazoniumsalzsuspension gibt man 465 Teile einer wäßrigen, neutralen Suspension von 106,5 Teilen 1-Benzoylamino-8-naphthol-3,6-disulfonsäure hinzu, stellt mittels Natriumbicarbonat einen pH-Wert von 1,3 ein und führt die Kupplungsreaktion unter Einhaltung dieses pH-Wertes und einer Temperatur von etwa 15 °C während drei Stunden zu Ende. Der Reaktionsansatz bleibt sowohl während der Diazotierungs- als auch während der Kupplungsreaktion gut rührfähig. Man erhält eine hochkonzentrierte Lösung bzw. Suspension des Monoazofarbstoffes der Formel

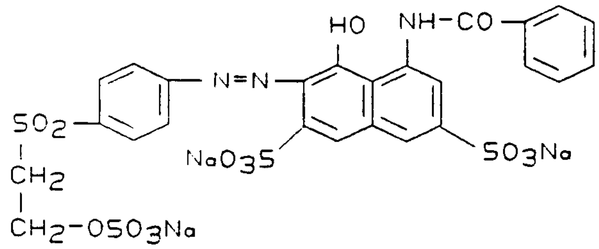

mit einem Farbstoffgehalt von etwa 22 %.

**Beispiel 25**

Man versetzt eine Lösung aus 20 Teilen des Natriumsalzes eines Naphthalinsulfonsäure-Formaldehyd-Kondensationsprodukts mit einem Sulfierungsgrad von 80 bis 120 % und einer mittleren Molmasse von etwa 6.500 in 600 Teilen Wasser mit 287 Teilen 4-($\beta$-Sulfatoethylsulfonyl)-anilin und stellt mittels Natriumcarbonat einen pH-Wert von 5,5 ein. Sodann gibt man 700 Teile Eis und 279 Teile einer 30 %igen wäßrigen Salzsäure hinzu und führt die Diazotierung der Anilinverbindung in üblicher Weise mittels 182 Teilen einer etwa 38 %igen wäßrigen Natriumnitritlösung durch. Zu der so erhaltenen Diazoniumsalzsuspension gibt man 319 Teile 1-Amino-8-naphthol-4,6-disulfonsäure und führt die Kupplungsreaktion bei einem pH-Wert von 1,3 und einer Temperatur von 10 bis 15 °C durch. Die Kupplungreaktion ist nach etwa 5 bis 8 Stunden beendet. Sowohl während der Diazotierungs- als auch während der Kupplungsreaktion blieb der Reaktionsansatz gut rührfähig.

Man erhält eine konzentrierte wäßrige Farbstofflösung bzw. Suspension des Monoazofarbstoffes der Formel

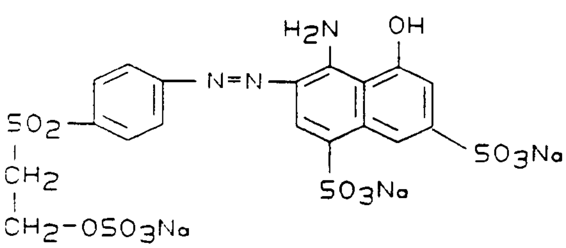

mit einem Farbstoffgehalt von etwa 28 %.

**Beispiele 26 bis 34**

Zur Herstellung eines Disazofarbstoffs der allgemeinen Formel (B)

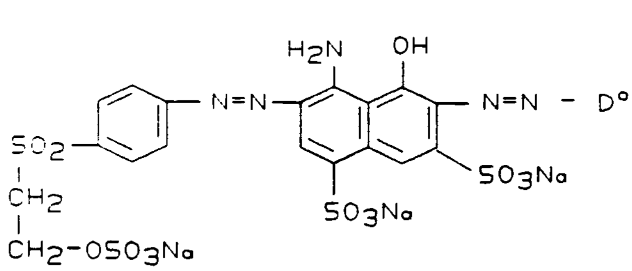

(B)

in welcher D° eine der in den nachstehenden Tabellenbeispielen angegebenen Bedeutungen hat, wobei M hier für ein Alkalimetall, wie Natrium, steht, verfährt man zunächst gemäß der Verfahrensweise des Beispiels 25 und setzt sodann zu der dort erhaltenen Lösung oder Suspension des Monoazofarbstoffs die wäßrige Lösung oder Suspension eines auf üblichem Weg erhaltenen Diazoniumsalzes eines aromatischen Amins der allgemeinen Formel D°-$NH_2$ mit D° der in dem jeweiligen Tabellenbeispiel angegebenen Bedeutung hinzu, stellt den Reaktionsansatz auf einen pH-Wert zwischen 4 und 6 und führt die zweite

Kupplungsreaktion mit dieser zweiten Diazokomponente innerhalb dieses pH-Bereichs und einer Temperatur zwischen 15 und 20 °C durch. Nach der üblichen Klärfiltration erhält man eine hochkonzentrierte Lösung, gegebenenfalls Suspension, dieses Disazofarbstoffs. Wie in der Reaktionsphase der ersten Kupplungsreaktion blieb auch der Ansatz während der zweiten Kupplungsreaktion gut rührfähig.

| Bsp. | Rest D° |
|---|---|
| 26 | 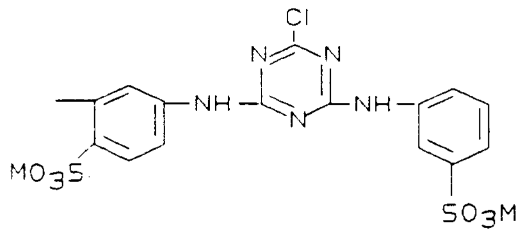 |
| 27 | 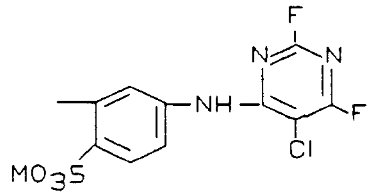 |
| 28 | 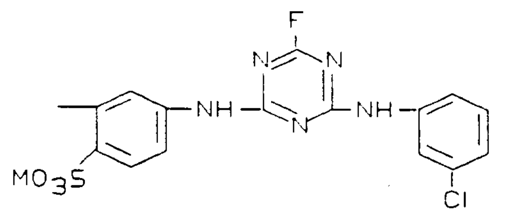 |
| 29 | 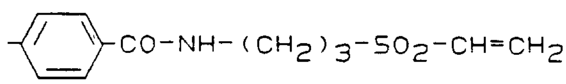 |
| 30 | 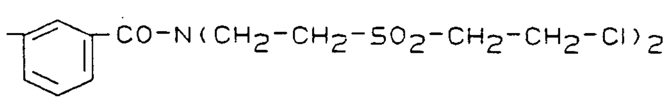 |
| 31 | 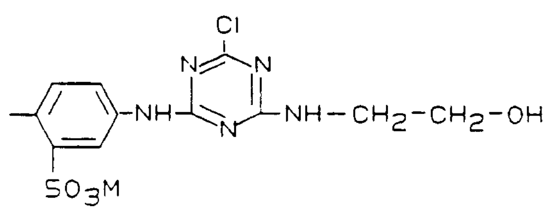 |
| 32 | 2-Methoxy-5-(β-sulfatoethylsulfonyl)-phenyl |

| Bsp. | Rest D° |
|---|---|
| 33 | 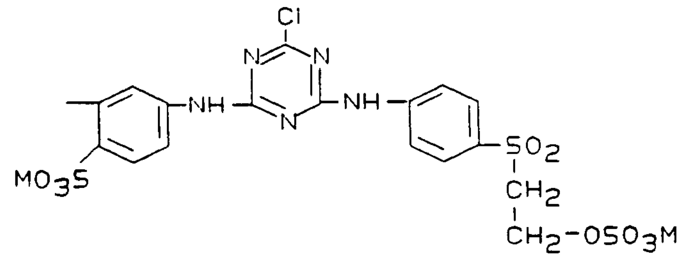 |
| 34 | 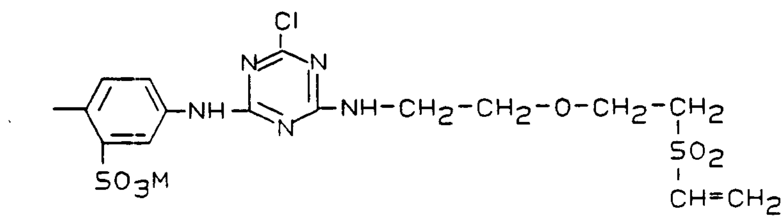 |

Beispiel 35

421,5 Teile 4-($\beta$-Sulfatoethylsulfonyl)-anilin werden in eine Lösung von 10 Teilen des Natriumsalzes eines Naphthalinsulfonsäure-Formaldehyd-Kondensationsproduktes mit einem Sulfierungsgrad von etwa 90 bis 120 % und einer mittleren Molmasse von etwa 6500 in 600 Teilen Wasser und 210 Teilen einer wäßrigen 30 %igen Salzsäure eingetragen, und die Suspension wird noch mehrere Stunden gerührt. Anschließend gibt man 600 Teile Eis hinzu und diazotiert in üblicher Weise mittles 280 Teilen einer wäßrigen 38 %igen Natriumnitritlösung. In die erhaltene Diazoniumsalzsuspension gibt man sodann 239,4 Teile 1-Amino-8-naphthol-3,6-disulfonsäure und rührt den Ansatz noch mehrere Stunden bei etwa 15 °C unter Einhaltung eines pH-Wertes von 1,3 mittels Natriumbicarbonat bis zur Beendigung der ersten Kupplungsreaktion nach. Sodann stellt man mit Natriumcarbonat einen pH-Wert von 5 ein, rührt den Ansatz noch kurze Zeit bis zur Beendigung der zweiten Kupplungsreaktion nach und klärt die erhaltene Farbstofflösung durch Verrühren mit Kieselgur und Filtration.

Der Reaktionsansatz ist während der gesamten Reaktionszeiten der Diazotierungsreaktion und der beiden Kupplungsreaktionen leicht rührfähig.

Das Filtrat enthält den Disazofarbstoff der im Beispiel 1 angegebenen Formel zu etwa 30 %. Die Farbstofflösung ist in einem weiten Temperaturbereich, so von etwa mindestens -5 °C bis +50 °C, über mehrere Wochen lagerstabil und färbt unter Anwendung der für faserreaktive Farbstoffe üblichen Applikations- und Fixiermethoden cellulosehaltige Materialien in marineblauen bis schwarzen Tönen.

**Patentansprüche**

1. Verfahren zur Herstellung einer konzentrierten wäßrigen Farbstofflösung eines anionischen Azofarbstoffes, vorzugsweise mit einem Farbstoffgehalt von 15 bis 40 Gew.-%, durch Diazotierungs- und Kupplungsreaktion in wäßrigem Medium, dadurch gekennzeichnet, daß man die Diazotierung des als Diazokomponente dienenden aromatischen Amins und/oder die Kupplungsreaktion zwischen dem Diazoniumsalz und der Kupplungskomponente bei einer Gesamtkonzentration an Diazonium- und Kupplungsverbindung von mindestens 10 Gew.-%, vorzugsweise von 15 bis 40 Gew.-%, bezogen auf die wäßrige Syntheselösung, in Gegenwart eines Hilfsmittels oder eines Gemisches solcher Hilfsmittel durchführt, das aus folgenden Verbindungen ausgewählt ist: Ligninsulfonate, Polycarboxylate, Copolymerisate aus ungesättigten Sulfonsäuren mit Acrylsäure, Kondensationsprodukte aus Phenolen mit Formaldehyd und Alkalisulfiten, Kondensationsprodukte aus Naphthalinsulfonsäuren oder Monoalkyl- und Dialkylnaphthalinsulfonsäuren mit Formaldehyd mit einem Sulfierungsgrad von 80 bis 200 %, vorzugsweise 80 bis 150%, und einem mittleren Molgewicht von 350 bis 35 000, Kondensationsprodukte von Ditolylethersulfonsäuren und Formaldehyd, von Diphenylethersulfonsäuren und Formaldehyd

und von Terphenylsulfonsäuren und Formaldehyd und Mischkondensationsprodukte aus den vorstehend genannten aromatischen Sulfonsäuren mit Formaldehyd, Sulfobernsteinsäurederivate von oxethylierten Nonylphenol-Formaldehyd-Kondensationsprodukten und Sulfobernsteinsäurehalbester-Verbindungen der allgemeinen Formel (a)

$A - (X - O)_n - CO - B$ (a)

in welcher X Ethylen oder Propylen ist, n eine ganze Zahl von 2 bis 25 ist, B eine Gruppe der Formel (b) oder (c)

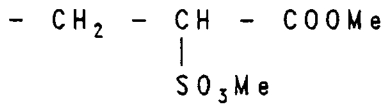

(b)

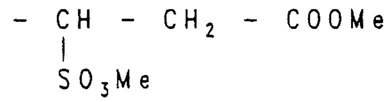

(c)

ist, worin Me Wasserstoff oder ein Alkalimetall bedeuten und A eine Gruppe der allgemeinen Formel (d) oder (e)

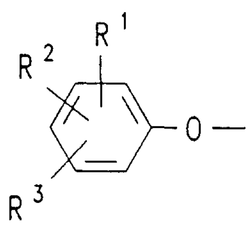

(d)

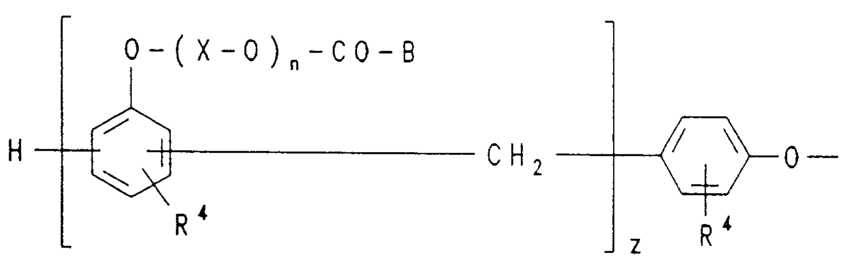

(e)

ist, in welchen X, n und B eine der obengenannten Bedeutungen haben, $R^1$ Alkyl von 4 bis 14 C-Atomen ist, $R^2$ und $R^3$ jedes Wasserstoff oder Alkyl von 4 bis 14 C-Atomen ist, $R^4$ Alkyl von 6 bis 14 C-Atomen ist und z für eine ganze Zahl von 1 bis 9 steht.

**2.** Verfahren nach Anspruch 1, dadurch gekennzeichnet, daß das Hilfsmittel ein Naphthalinsulfonsäure-, Monoalkylnaphthalinsulfonsäure- oder Dialkylriaphthalinsulfonsäure-Formaldehyd-Kondensationsprodukt mit einem Sulfierungsgrad zwischen 80 und 200 %, vorzugsweise zwischen 80 und 150 %, und einem mittleren Molgewicht von zwischen 350 und 35000 ist.

**3.** Verfahren nach Anspruch 1, dadurch gekennzeichnet, daß das Hilfsmittel ein Ligninsulfonat, ein Polyacrylat, ein Copolymerisat aus Maleinsäureanhydrid und Methylvinylether oder Methacrylsäure, Maleinsäure oder Acrylsäure oder ein Copolymerisat aus ungesättigten Sulfonsäuren mit Acrylsäure ist.

**4.** Verfahren nach Anspruch 1, dadurch gekennzeichnet, daß das Hilfsmittel ein Kondensationsprodukt aus einer phenolischen Verbindung mit Formaldehyd und einem Alkalisulfit ist.

**5.** Verfahren nach Anspruch 1, dadurch gekennzeichnet, daß das Hilfsmittel ein Kondensationsprodukt aus einer Ditolylethersulfonsäure oder Diphenylethersulfonsäure oder Terphenylsulfonsäure und Formaldehyd ist.

**6.** Verfahren nach Anspruch 1, dadurch gekennzeichnet, daß das Hilfsmittel ein Sulfobernsteinsäurehalbester von oxethylierten Nonylphenol-Formaldehyd-Kondensationsprodukten ist.

**7.** Verfahren nach mindestens einem der Ansprüche 1 bis 6, dadurch gekennzeichnet, daß man das Hilfsmittel in einer Menge von 0,01 bis 10 Gew.-%, bezogen auf das Gewicht des herzustellenden Azofarbstoffes, in die Synthese einsetzt.

**8.** Verfahren nach mindestens einem der Ansprüche 1 bis 6, dadurch gekennzeichnet, daß man das Hilfsmittel in einer Menge von 0,05 bis 5 Gew.-%, bezogen auf das Gewicht des herzustellenden Azofarbstoffes, in die Synthese einsetzt.

**9.** Verfahren nach mindestens einem der Ansprüche 1 bis 8, dadurch gekennzeichnet, daß der anionische Azofarbstoff ein faserreaktiver Farbstoff ist.

**10.** Verfahren nach Anspruch 9, dadurch gekennzeichnet, daß die Diazokomponente 4-($\beta$-Sulfatoethylsulfonyl)-anilin und die Kupplungskomponente 1-Amino-3,6- oder -4,6-disulfo-8-naphthol ist.

**11.** Verwendung eines Hilfsmittels oder eines Gemisches solcher Hilfsmittel, das aus folgenden Verbindungen ausgewählt ist:
Ligninsulfonate, Polycarboxylate, Copolymerisate aus ungesättigten Sulfonsäuren mit Acrylsäure, Kondensationsprodukte aus Phenolen mit Formaldehyd und Alkalisulfiten, Kondensationsprodukte aus Naphthalinsulfonsäuren oder Monoalkyl- und Dialkylnaphthalinsulfonsäuren mit Formaldehyd mit einem Sulfierungsgrad von 80 bis 200 %, vorzugsweise 80 bis 150%, und einem mittleren Molgewicht von 350 bis 35 000, Kondensationsprodukte von Ditolylethersulfonsäuren und Formaldehyd, von Diphenylethersulfonsäuren und Formaldehyd und von Terphenylsulfonsäuren und Formaldehyd und Mischkondensationsprodukte aus den vorstehend genannten aromatischen Sulfonsäuren mit Formaldehyd, Sulfobernsteinsäurederivate von oxethylierten Nonylphenol-Formaldehyd-Kondensationsprodukten und Sulfobernsteinsäurehalbester-Verbindungen der allgemeinen Formel (a)

$$A - (X - O)_n - CO - B \quad (a)$$

in welcher X Ethylen oder Propylen ist, n eine ganze Zahl von 2 bis 25 ist, B eine Gruppe der Formel (b) oder (c)

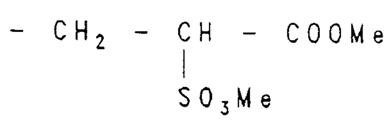

(b)

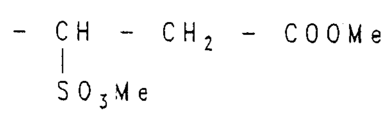

(c)

ist, worin Me Wasserstoff oder ein Alkalimetall bedeuten und A eine Gruppe der allgemeinen Formel (d) oder (e)

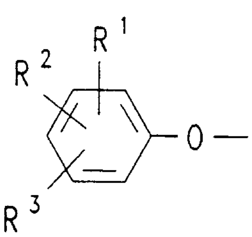

(d)

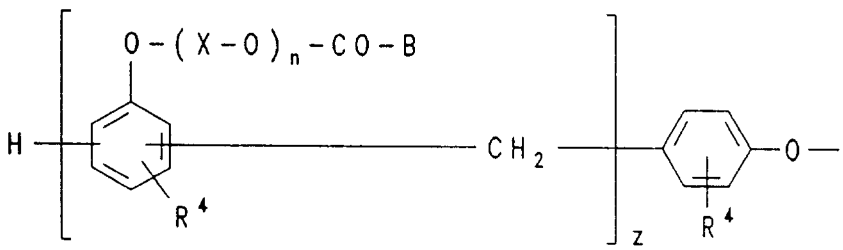

(e)

ist, in welchen X, n und B eine der obengenannten Bedeutungen haben, $R^1$ Alkyl von 4 bis 14 C-Atomen ist, $R^2$ und $R^3$ jedes Wasserstoff oder Alkyl von 4 bis 14 C-Atomen ist, $R^4$ Alkyl von 6 bis 14 C-Atomen ist und z für eine ganze Zahl von 1 bis 9 steht, in den Diazotierungs- und/oder Kupplungsreaktionen der Herstellung von anionischen Azofarbstoffen in konzentrierten, wäßrigen Lösungen.

## Claims

**1.** Process for the production of a concentrated aqueous dye solution of an anionic azo dye, preferably with a dye content of 15 to 40% by weight, by a diazotizing and coupling reaction in an aqueous medium, characterized by

that the diazotization of the aromatic amine acting as the diazo component and/or the coupling reaction between the diazonium salt and the coupling component are/is carried out at a total concentration of diazonium and coupling compound of at least 10% by weight, preferably 15 to 40% by weight, relative to the aqueous synthesis solution, in the presence of an auxiliary or of a mixture of such auxiliaries which is selected from the following compounds: lignosulphonates, polycarboxylates, copolymers derived from unsaturated sulphonic acids with acrylic acid, condensation products derived from phenols with formaldehyde and alkali sulphites, condensation products derived from naphthalene sulphonic acids or monoalkyl and dialkyl naphthalene sulphonic acids with formaldehyde having a degree of sulphonation of 80 to 200%, preferably 80 to 150%, and a mean molecular weight of 350 to 35 000, condensation products derived from ditolyl ether sulphonic acids and formaldehyde, from diphenyl ether sulphonic acids and formaldehyde and from terphenyl sulphonic acids and formaldehyde and co-condensation products derived from the aforementioned aromatic sulphonic acids with formaldehyde, sulphosuccinic acid derivatives of ethoxylated nonyl phenol formaldehyde condensation products and sulphosuccinic acid semi-ester compounds having the general formula (a)

$A - (X - O)_n - CO - B$ (a)

in which X is ethylene or propylene, n is an integer from 2 to 25, and B is a group having the formula (b) or (c)

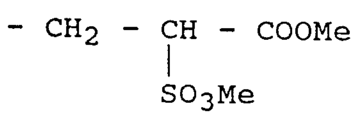

(b)

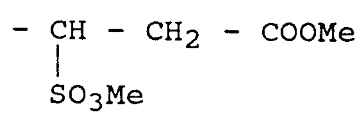

(c)

in which Me denotes hydrogen or an alkaline metal and A denotes a group having the general formula (d) or (e)

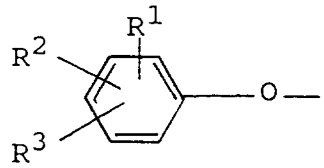

(d)

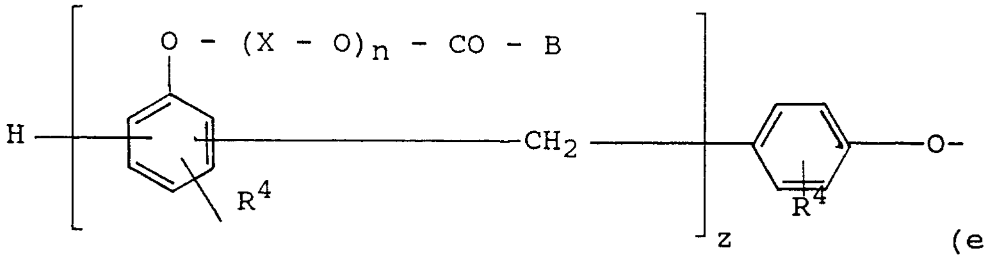

(e)

in which X, n and B have one of the above-mentioned meanings, $R^1$ is alkyl of 4 to 14 carbon atoms, $R^2$ and $R^3$ are each hydrogen or alkyl or 4 to 14 carbon atoms, $R^4$ is alkyl of 6 to 14 carbon atoms and z denotes an integer from 1 to 9.

**2.** Process in accordance with Claim 1, characterized by
that the auxiliary is a condensation product of naphthalene sulphonic acid, monoalkyl naphthalene sulphonic acid or dialkyl naphthalene sulphonic acid with a degree of sulphonation between 80 and 200%, preferably between 80 and 150%, and a mean molecular weight of between 350 and 35000.

**3.** Process in accordance with Claim 1, characterized by
that the auxiliary is a lignosulphonate, a polyacrylate, a copolymer of maleic acid anhydride and methyl vinyl ether or methacrylic acid, maleic acid or acrylic acid or a copolymer of unsaturated sulphonic acids with acrylic acid.

**4.** Process in accordance with Claim 1, characterized by
that the auxiliary is a condensation product of a phenolic compound with formaldehyde and an alkali sulphite.

**5.** Process in accordance with Claim 1, characterized by
that the auxiliary is a condensation product derived from a ditolyl ether sulphonic acid or diphenyl ether sulphonic acid or terphenyl sulphonic acid and formaldehyde.

**6.** Process in accordance with claim 1, characterized by
that the auxiliary is a sulphosuccinic acid semi-ester of ethoxylated nonyl phenol-formaldehyde condensation products.

**7.** Process in accordance with at least one of the Claims 1 to 6, characterized by that the auxiliary is introduced into the synthesis in a quantity of 0.01 to 10% by weight, relative to the weight of the azo dye to be manufactured.

**8.** Process in accordance with at least one of the Claims 1 to 6, characterized by that the auxiliary is introduced into the synthesis in a quantity of 0.05 to 5% by weight, relative to the weight of the azo dye to be manufactured.

**9.** Process in accordance with at least one of the claims 1 to 8, characterized by that the anionic azo dye is a fibre-reactive dye.

**10.** Process in accordance with Claim 9, characterized by
that the diazo component is 4-($\beta$-sulphatoethyl sulphonyl)- aniline and the coupling component is 1-amino-3,6- or -4,6-disulpho-8-naphthol.

**11.** Use of an auxiliary or a mixture of such auxiliaries selected from the following compounds: lignosulphonates, polycarboxylates, copolymers derived from unsaturated sulphonic acids with acrylic acid, condensation products derived from phenols with formaldehyde and alkali sulphites, condensation products derived from naphthalene sulphonic acids or monoalkyl and dialkyl naphthalene sulphonic acids with formaldehyde having a degree of sulphonation of 80 to 200%, preferably 80 to 150%, and a mean molecular weight of 350 to 35 000, condensation products derived from ditoyl ether sulphonic acids and formaldehyde, from diphenyl ether sulphonic acids and formaldehyde and from terphenyl sulphonic acids and formaldehyde and co-condensation products derived from the aforementioned aromatic sulphonic acids with formaldehyde, sulphosuccinic acid derivatives of ethoxylated nonyl phenol formaldehyde condensation products and sulphosuccinic acid semi-ester compounds having the general formula (a)

$A - (X - O)_n - CO - B$ (a)

in which X is ethylene or propylene, n is an integer from 2 to 25, and B is a group having the formula (b) or (c)

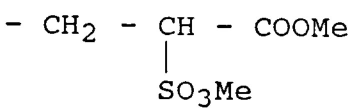

(b)

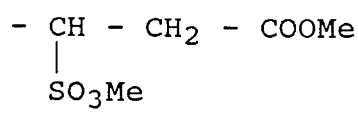

(c)

in which Me denotes hydrogen or an alkaline metal and A denotes a group having the general formula (d) or (e)

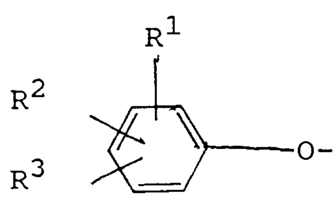

(d)

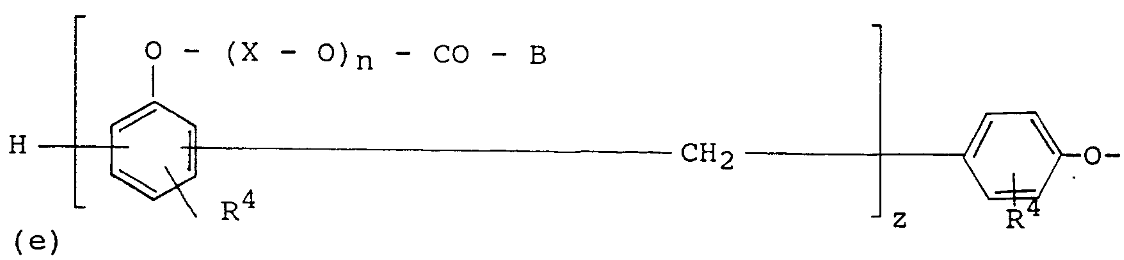

(e)

in which X, n and B have one of the above-mentioned meanings, $R^1$ is alkyl from 4 to 14 carbon atoms, $R^2$ and $R^3$ are each hydrogen or alkyl from 4 to 14 carbon atoms, $R^4$ is alkyl from 6 to 14 carbon atoms and z denotes an integer from 1 to 9, in the diazotizing and/or coupling reactions of the production of anionic azo dyes in concentrated, aqueous solutions.

## Revendications

**1.** Procédé de préparation d'une solution aqueuse concentrée de colorant d'un colorant azoïque anionique, ayant de préférence une teneur en colorant comprise entre 15 et 40% en poids, par réaction de

diazotation et de copulation en milieu aqueux, **caractérisé** en ce que l'on réalise la diazotation de l'amine aromatique servant de composant diazo et/ou la réaction de copulation entre le sel de diazonium et le composant de copulation à une concentration totale en composé diazonium et en composé de copulation d'au moins 10% en poids, rapporté à la solution aqueuse de synthèse, comprise de préférence entre 15 et 40% en poids, en présence d'un agent auxiliaire ou d'un mélange de tels agents auxiliaires, choisi parmi les composés suivants : lignosulfonates, polycarboxylates, copolymérisats d'acides sulfoniques insaturés avec l'acide acrylique, produits de condensation de phénols avec du formaldéhyde et des sulfites alcalins, produits de condensation d'acides naphtalènesulfoniques ou d'acides monoalkyl- et dialkylnaphtalènesulfoniques avec du formaldéhyde, ayant un taux de sulfonation compris entre 80 et 200%, de préférence entre 80 et 150%, et ayant un poids moléculaire moyen compris entre 350 et 35.000, produits de condensation d'acides ditolyléthersulfoniques et de formaldéhyde, d'acides diphényléthersulfoniques et de formaldéhyde et d'acides terphénylsulfonique et de formaldéhyde et de produits de co-condensation d'acides sulfoniques aromatiques cités précédemment avec du formaldéhyde, des dérivés d'acides sulfosucciniques des produits de condensation nonylphénol oxoéthyléformaldéhyde et des composés acide-ester de l'acide sulfosuccinique de formule générale (a)

$A - (X - O)_n - CO - B$ (a)

dans laquelle X est un éthylène ou un propylène, n est un nombre entier compris entre 2 et 25, B est un groupe de formules (b) ou (c)

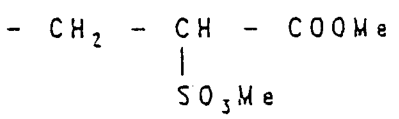

(b)

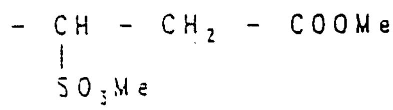

(c)

dans lesquelles les Me signifient un hydrogène ou un métal alcalin et A est un groupe de formule générale (d) ou (e)

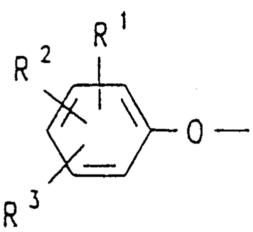

(d)

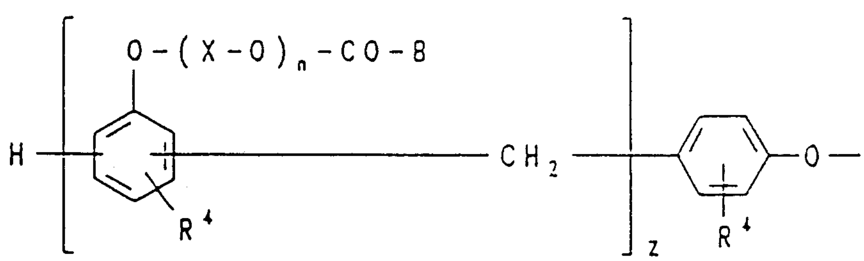

(e)

dans lesquelles X, n et B ont l'une des significations précédentes, $R^1$ est un alkyle de 4 à 14 atomes de carbone, $R^2$ et $R^3$ sont chacun un hydrogène ou un alkyle de 4 à 14 atomes de carbone, $R^4$ est un alkyle de 6 à 14 atomes de carbone et z représente un nombre entier compris entre 1 et 9.

**2.** Procédé selon la revendication 1 **caractérisé** en ce que l'agent auxiliaire est un produit de condensation d'un acide naphtalènesulfonique, monoalkylnaphtalènesulfonique ou dialkylnaphtalènesulfonique et de formaldéhyde, ayant un taux de sulfonation compris entre 80 et 200%, de préférence entre 80 et 150%, et ayant un poids moléculaire moyen compris entre 350 et 35.000.

**3.** Procédé selon la revendication 1 **caractérisé** en ce que l'agent auxiliaire est un lignosulfonate, un polyacrylate, un copolymérisat de l'anhydride de l'acide maléique et de méthylvinyléther ou de l'acide méthacrylique, maléique ou acrylique ou un copolymérisat d'acides sulfoniques insaturés avec l'acide acrylique.

**4.** Procédé selon la revendication 1 **caractérisé** en ce que l'agent auxiliaire est un produit de condensation d'un composé phénolique avec du formaldéhyde et un sulfite alcalin.

**5.** Procédé selon la revendication 1, **caractérisé** en ce que l'agent auxiliaire est un produit de condensation d'un acide ditolyléthersulfonique ou diphényléchersulfonique ou terphénylsulfonique et de formaldéhyde.

**6.** Procédé selon la revendication 1 **caractérisé** en ce que l'agent auxiliaire est un produit de condensation d'un acide-ester de l'acide sulfosuccinique de nonylphénol oxoéthylé-formaldéhyde.

**7.** Procédé selon au moins une des revendications 1 à 6 **caractérisé** en ce que l'agent auxiliaire est introduit dans la synthèse, dans une quantité comprise entre 0,01 et 10% en poids, rapporté au poids du colorant azoïque préparé.

**8.** Procédé selon au moins une des revendications 1 à 6 **caractérisé** en ce que l'agent auxiliaire est introduit dans la synthèse dans une quantité comprise entre 0,05 et 5% en poids, rapporté au poids du colorant azoïque préparé.

**9.** Procédé selon au moins une des revendications 1 à 8 **caractérisé** en ce que le colorant azoïque anionique est un colorant réactif vis-à-vis des fibres.

**10.** Procédé selon la revendication 9, **caractérisé** en ce que le composant diazo est la 4-($\beta$-sulfatoéthylsulfonyl)-aniline et le composant de copulation est le 1-amino-3,6- ou -4,6-disulfo-8-naphtol.

**11.** Utilisation d'un agent auxiliaire ou d'un mélange de tels agents auxiliaires choisi parmi les composés suivants :

lignosulfonates, polycarboxylates, copolymérisats d'acides sulfoniques insaturés avec l'acide acrylique, produits de condensation de phénols avec du formaldéhyde et des sulfites alcalins, produits de condensation d'acides naphtalènesulfonique ou d'acides monoalkyl- et dialkylnaphtalènesulfoniques avec du formaldéhyde, ayant un taux de sulfonation compris entre 80 et 200%, de préférence entre 80 et 150%, et ayant un poids moléculaire moyen compris entre 350 et 35.000, produits de cocondensation d'acides ditolyléthersulfoniques et de formaldéhyde, d'acides diphényléthersulfoniques et de formaldéhyde et d'acides terphénylsulfoniques et de formaldéhyde et de produits de condensation mixtes d'acides sulfoniques aromatiques cités précédemment avec du formaldéhyde, des dérivés d'acides sulfosucciniques des produits de condensation nonylphénol oxoéthyléformaldéhyde et composés acide-ester de l'acide sulfosuccinique de formule générale (a)

$$A - (X - O)_n - CO - B \qquad (a)$$

dans laquelle X est un éthylène ou un propylène, n est un nombre entier compris entre 2 et 25, B est un groupe de formules (b) ou (c)

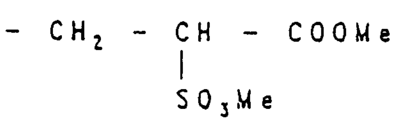

(b)

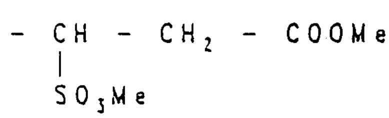

(c)

dans lesquelles les Me signifient un hydrogène ou un métal alcalin et A est un groupe de formule générale (d) ou (e)

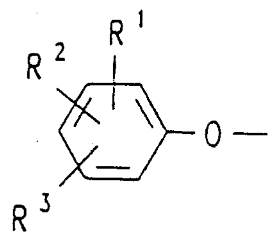

(d)

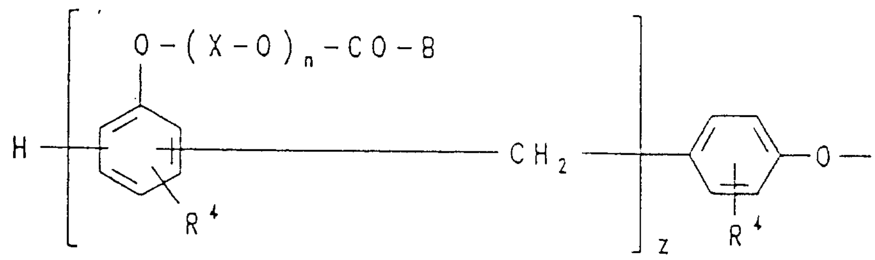

(e)

dans lesquelles X, n et B ont l'une des significations précédentes, $R^1$ est un alkyle de 4 à 14 atomes de carbone, $R^2$ et $R^3$ sont chacun un hydrogène ou un alkyle de 4 à 14 atomes de carbone, $R^4$ est un alkyle de 6 à 14 atomes de carbone et Z représente un nombre entier compris entre 1 et 9.